# EUROPEAN PATENT SPECIFICATION

(11) **EP 4 270 828 B1**
(45) Date of publication and mention of the grant of the patent: **18.02.2026**
(21) Application number: 21911163.0
(22) Date of filing: 01.07.2021
(51) Int. Cl.: H04W 64/00, H04W 76/14, H04L 1/08, H04L 5/00, G01S 5/02, H04W 72/04

(54) **NETWORK-BASED POSITIONING METHOD USING RELAY IN NR-V2X SYSTEM, AND DEVICE THEREFOR**
NETZWERKBASIERTES POSITIONIERUNGSVERFAHREN MIT RELAIS IN EINEM NR-V2X-SYSTEM UND VORRICHTUNG DAFÜR
PROCÉDÉ DE POSITIONNEMENT BASÉ SUR UN RÉSEAU UTILISANT UN RELAIS DANS UN SYSTÈME NR-V2X, ET DISPOSITIF ASSOCIÉ

(30) Priority: 24.12.2020 KR 20200183809
(43) Date of publication of application: 01.11.2023
(73) Proprietor: LG Electronics Inc., Yeongdeungpo-gu Seoul 07336 (KR)
(72) Inventor: BAEK, Jongseob, Seoul 06772 (KR); SEO, Hanbyul, Seoul 06772 (KR)
(74) Representative: Mooser, Sebastian Thomas
(86) International application number: PCT/KR2021/008333
(87) International publication number: WO 2022/139093

(56) References cited:
- WO-A1-2016/013852
- WO-A1-2020/204539
- WO-A1-2020/221151
- WO-A1-2020/246842
- US-A1- 2017 332 192
- SAMSUNG: "On Resource Allocation for NR V2X Mode 1", 3GPP DRAFT; R1-1910470 ON RESOURCE ALLOCATION FOR NR V2X MODE 1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Chongqing, China; 20191014 - 20191020, 8 October 2019 (2019-10-08), Mobile Competence Centre ; 650, route des Lucioles ; F-06921 Sophia-Antipolis Cedex ; France , XP051789276

## Description

### TECHNICAL FIELD

The present disclosure relates to network-based positioning, and more particularly, to a method, apparatus and computer-readable storage medium of performing network-based positioning with a relay in a New Radio vehicle-to-everything (NR-V2X) system.

### BACKGROUND

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multi carrier frequency division multiple access (MC-FDMA) system.

A sidelink (SL) refers to a communication method in which a direct link is established between user equipment (UE), and voice or data is directly exchanged between UEs without going through a base station (BS). SL is being considered as one way to solve the burden of the base station due to the rapidly increasing data traffic.

V2X (vehicle-to-everything) refers to a communication technology that exchanges information with other vehicles, pedestrians, and infrastructure-built objects through wired/wireless communication. V2X may be divided into four types: vehicle-to-vehicle (V2V), vehicle-to-infrastructure (V2I), vehicle-to-network (V2N), and vehicle-to-pedestrian (V2P). V2X communication may be provided through a PCS interface and/or a Uu interface.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive Machine Type Communication (MTC), and Ultra-Reliable and Low Latency Communication (URLLC) may be referred to as new radio access technology (RAT) or new radio (NR). Even in NR, vehicle-to-everything (V2X) communication may be supported.

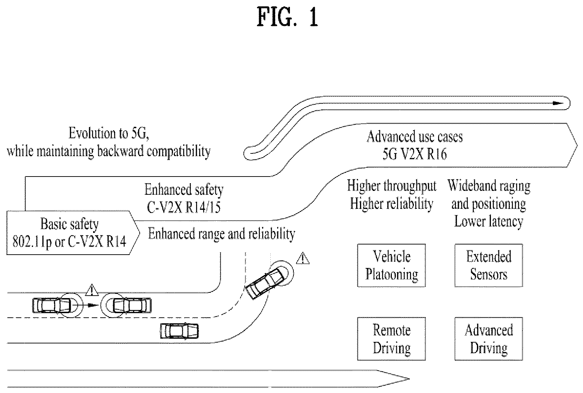

FIG. 1 is a diagram comparing RAT-based V2X communication before NR with NR-based V2X communication.

Regarding V2X communication, in RAT prior to NR, a scheme for providing a safety service based on V2X messages such as a basic safety message (BSM), a cooperative awareness message (CAM), and a decentralized environmental notification message (DENM) was mainly discussed. The V2X message may include location information, dynamic information, and attribute information. For example, the UE may transmit a periodic message type CAM and/or an event triggered message type DENM to another UE.

For example, the CAM may include dynamic state information about a vehicle such as direction and speed, vehicle static data such as dimensions, and basic vehicle information such as external lighting conditions and route details. For example, a UE may broadcast the CAM, and the CAM latency may be less than 100 ms. For example, when an unexpected situation such as a breakdown of the vehicle or an accident occurs, the UE may generate a DENM and transmit the same to another UE. For example, all vehicles within the transmission coverage of the UE may receive the CAM and/or DENM. In this case, the DENM may have a higher priority than the CAM.

Regarding V2X communication, various V2X scenarios have been subsequently introduced in NR. For example, the various V2X scenarios may include vehicle platooning, advanced driving, extended sensors, and remote driving.

For example, based on vehicle platooning, vehicles may dynamically form a group and move together. For example, to perform platoon operations based on vehicle platooning, vehicles belonging to the group may receive periodic data from a leading vehicle. For example, the vehicles belonging to the group may reduce or increase the distance between the vehicles based on the periodic data.

For example, based on advanced driving, a vehicle may be semi-automated or fully automated. For example, each vehicle may adjust trajectories or maneuvers based on data acquired from local sensors of nearby vehicles and/or nearby logical entities. Also, for example, each vehicle may share driving intention with nearby vehicles.

For example, on the basis of extended sensors, raw data or processed data acquired through local sensors, or live video data may be exchanged between a vehicle, a logical entity, UEs of pedestrians and/or a V2X application server. Thus, for example, the vehicle may recognize an environment that is improved over an environment that may be detected using its own sensor.

For example, for a person who cannot drive or a remote vehicle located in a dangerous environment, a remote driver or V2X application may operate or control the remote vehicle based on remote driving. For example, when a route is predictable as in the case of public transportation, cloud computing-based driving may be used to operate or control the remote vehicle. For example, access to a cloud-based back-end service platform may be considered for remote driving.

In the NR V2X system, positioning-related control information needs to be efficiently provided to perform SL positioning between UEs or between a UE and an anchor node (AN).

SL positioning may be used for positioning between vehicles. For vehicle safety, reliable positioning information needs to be provided between vehicles. In addition, positioning control information needs to be provided efficiently in consideration of various factors affecting positioning.

Document WO2020/221151 discloses a method and system of two UEs using blind retransmissions for sending the SCI messaging.

Document WO2020/204539 discloses a method in which a first terminal performs blind retransmissions in a sidelink V2X communication system.

Document WO2016/013852 discloses a method in which a target terminal finds neighboring anchors by using a discovery signal, so that it can retrieve positioning information from the anchors.

### DISCLOSURE

### TECHNICAL PROBLEM

An object of the present disclosure is to provide a method of performing network-based positioning with a relay in a New Radio vehicle-to-everything (NR-V2X) positioning system and apparatus therefor.

Another object of the present disclosure is to provide a positioning protocol for performing network-based positioning with a Uu link and a sidelink.

Another object of the present disclosure is to provide a network-based positioning method based on a relay capable of providing a positioning solution optimized for the states of a user equipment (UE) and network by adaptively applying various positioning methods depending on positioning service types, the positioning capabilities of the UE and relay, the number of available anchor nodes (ANs), and changes in the surrounding environment and apparatus therefor.

A further object of the present disclosure is to provide a network-based positioning method based on a relay in the NR-V2X positioning system to effectively improve the positioning performance of a remote UE whose positioning performance is degraded through cooperation with a relay UE without additional network expansion and apparatus therefor.

It will be appreciated by persons skilled in the art that the objects that could be achieved with the various embodiments of the present disclosure are not limited to what has been particularly described hereinabove and the above and other objects that the various embodiments of the present disclosure could achieve will be more clearly understood from the following detailed description.

### TECHNICAL SOLUTION

In another aspect of the present disclosure, there is provided a method of performing blind retransmission by a transmitting user equipment (UE) in a sidelink communication system. The method includes: configuring transmission channel resources for the blind retransmission; generating a first signal group for sidelink positioning based on the configured transmission channel resources; transmitting the generated first signal group on a sidelink; receiving a second signal group from a receiving UE on the sidelink in response to the first signal group; and measuring an absolute position of the transmitting UE based on positioning information included in the second signal group.

According to an embodiment, the first signal group may be repeatedly transmitted by the transmitting UE a predetermined number of times X, and the second signal group may be repeatedly transmitted by the receiving UE a predetermined number of times Y.

According to an embodiment, X and Y may be configured by any one of a system information block (SIB), first stage sidelink control information (SCI) and/or second stage SCI on a physical sidelink control channel/physical sidelink shared channel (PSCCH/PSSCH), or a data channel.

According to an embodiment, the first signal group may be repeatedly transmitted regardless of whether the second signal group is received.

According to an embodiment, the first signal group may include first positioning signaling and a first sidelink positioning reference signal, and the first positioning signaling and the first sidelink positioning reference signal may be mapped to and transmitted in a same slot.

According to an embodiment, the first positioning signaling may include information on a first unique identifier (ID) corresponding to the first signal group, and the first unique ID may change whenever the first signal group is transmitted.

According to an embodiment, a pattern of the first sidelink positioning reference signal may be generated by applying a different cyclic shift size whenever the first signal group is transmitted, and the cyclic shift size may be determined based on the first unique ID.

According to an embodiment, the second signal group may include second positioning signaling and a second sidelink positioning reference signal. In this case, a second unique ID included in the second positioning signaling may be identical to the first unique ID, or the second unique ID may be determined according to a specific rule with the first unique ID as a factor such that the second unique ID is mapped one-to-one thereto.

According to an embodiment, a different cyclic shift size may be applied to a pattern of the second sidelink positioning reference signal whenever the second signal group is received, and the cyclic shift size for the pattern of the second sidelink positioning reference signal may be determined based on the second unique ID.

According to an embodiment, the positioning information may include at least one of Round Trip Time (RTT) information or Angle of Arrival (AoA) information measured based on at least one of a first sidelink positioning reference signal corresponding to the first signal group or a second sidelink positioning reference signal corresponding to the second signal group.

According to an embodiment, the positioning information may include information on multiple transmission reception time differences (TRTDs) measured for a plurality of first sidelink positioning reference signals.

According to an embodiment, a method of allocating the transmission channel resources for the blind retransmission may include at least one of an alternative allocation method, a repetitive and alternative allocation method, a sequential allocation method, or a random allocation method.

In another aspect of the present disclosure, there is provided a UE configured to perform blind retransmission in a sidelink communication system. The UE includes: a transceiver configured to transmit and receive a signal; and a processor connected to the transceiver. The processor may be configured to: configure transmission channel resources for the blind retransmission; generate a first signal group for sidelink positioning based on the configured transmission channel resources; transmit the generated first signal group on a sidelink; receive a second signal group from another UE on the sidelink in response to the first signal group; and measure an absolute position of the UE based on positioning information included in the second signal group.

In another aspect of the present disclosure, not covered by the scope of the claims, there is provided a processor configured to perform operations for a UE in a sidelink communication system. The operations may include: configuring transmission channel resources for blind retransmission; generating a first signal group for sidelink positioning based on the configured transmission channel resources; transmitting the generated first signal group on a sidelink; receiving a second signal group from another UE on the sidelink in response to the first signal group; and measuring an absolute position of the UE based on positioning information included in the second signal group.

In a further aspect of the present disclosure, there is provided a non-volatile computer-readable storage medium having stored thereon at least one computer program including instructions that, when executed by at least one processor, cause the at least one processor to perform operations for a UE. The operations include: configuring transmission channel resources for blind retransmission; generating a first signal group for sidelink positioning based on the configured transmission channel resources; transmitting the generated first signal group on a sidelink; receiving a second signal group from another UE on the sidelink in response to the first signal group; and measuring an absolute position of the UE based on positioning information included in the second signal group.

### ADVANTAGEOUS EFFECTS

According to a network-based positioning method based on a relay according to various embodiments, a network may perform positioning for a remote user equipment (UE) whose positioning performance is degraded through cooperation with a relay UE, thereby improving positioning performance.

According to a network-based positioning method based on a relay according to various embodiments, a positioning solution optimized for the states of a UE and network may be provided by adaptively applying various positioning methods depending on positioning service types, the positioning capabilities of the UE and relay, and the number of available anchor nodes (ANs).

According to a network-based positioning method based on a relay according to various embodiments, the positioning performance of a remote UE whose positioning performance is degraded may be effectively improved through cooperation with a relay UE without network expansion.

In addition, the present disclosure provides a new positioning protocol based on a relay UE, thereby effectively performing network-based positioning for a remote UE when it is difficult for the remote UE to receive a Uu-PRS (positioning reference signal) from a base station.

Further, a procedure for performing a network-based positioning protocol for Downlink Time Difference of Arrival with Relay (DL-TDoA-R) positioning may be easily applied to procedures for performing Multi-cell Round Trip Time with Relay (Multi-cell RTT-R) positioning and Uplink Time Difference of Arrival with Relay (UL-TDoA) positioning.

Effects to be achieved by embodiment(s) are not limited to what has been particularly described hereinabove and other effects not mentioned herein will be more clearly understood by persons skilled in the art to which embodiment(s) pertain from the following detailed description.

### BRIEF DESCRIPTION OF THE DRAWINGS

The accompanying drawings, which are included to provide a further understanding of the disclosure and are incorporated in and constitute a part of this application, illustrate embodiments of the disclosure and together with the description serve to explain the principle of the disclosure.
FIG. 1 is a diagram for explaining and comparing vehicle-to-everything (V2X) communication based on radio access technology (RAT) before new radio (NR) and V2X communication based on NR.
FIG. 2 illustrates the structure of a NR system.
FIG. 3 illustrates the structure of a radio frame of NR.
FIG. 4 illustrates the slot structure of a NR frame.
FIG. 5 illustrates a radio protocol architecture for sidelink (SL) communication.
FIG. 6 illustrates user equipments (UEs) performing V2X or SL communication.
FIG. 7 illustrates a resource unit for V2X or SL communication.
FIG. 8 illustrates a procedure in which UEs perform V2X or SL communication depending on transmission modes.
FIG. 9 illustrates an exemplary architecture of a fifth generation (5G) system capable of positioning of a UE connected to Next Generation Radio Access Network (NG-RAN) or Evolved Universal Terrestrial Radio Access Network E-UTRAN according to an example of the present disclosure.
FIG. 10 illustrates an implementation example of a network for measuring a location of a UE according to an example of the present disclosure.
FIG. 11 is a diagram for explaining a method of allocating channel resources to a transmitting UE and a receiving UE for blind retransmission in a sidelink positioning system according to an embodiment.
FIG. 12 is a diagram for explaining a blind retransmission operation method and a multi-TRTD (Tx-Rx time difference) reporting method in a sidelink Round Trip Time (SL-RTT) positioning system according to an embodiment.
FIG. 13 is a diagram for explaining channel resources pre-designated for transmission of a sidelink positioning reference signal (SL-PRS) (Rx) and positioning signaling (Rx) according to an embodiment.
FIG. 14 is a flowchart illustrating a method by which a first UE performs blind retransmission in a sidelink positioning system according to an embodiment.
FIG. 15 illustrates a communication system applied to the present disclosure.
FIG. 16 illustrates wireless devices applicable to the present disclosure.
FIG. 17 illustrates other examples of wireless devices to which the present disclosure is applied.
FIG. 18 illustrates a vehicle or autonomous driving vehicle applied to the present disclosure.

### BEST MODE FOR CARRYING OUT THE DISCLOSURE

In another aspect of the present disclosure, there is provided a method of performing blind retransmission by a transmitting user equipment (UE) in a sidelink communication system. The method may include: configuring transmission channel resources for the blind retransmission; generating a first signal group for sidelink positioning based on the configured transmission channel resources; transmitting the generated first signal group on a sidelink; receiving a second signal group from a receiving UE on the sidelink in response to the first signal group; and measuring an absolute position of the transmitting UE based on positioning information included in the second signal group.

### MODE FOR CARRYING OUT THE DISCLOSURE

The wireless communication system is a multiple access system that supports communication with multiple users by sharing available system resources (e.g., bandwidth, transmission power, etc.). Examples of the multiple access system include a code division multiple access (CDMA) system, a frequency division multiple access (FDMA) system, a time division multiple access (TDMA) system, an orthogonal frequency division multiple access (OFDMA) system, a single carrier frequency (SC-FDMA) system, a multi carrier frequency division multiple access (MC-FDMA) system, and the like.

A sidelink refers to a communication scheme in which a direct link is established between user equipments (UEs) to directly exchange voice or data between UEs without assistance from a base station (BS). The sidelink is being considered as one way to address the burden on the BS caused by rapidly increasing data traffic.

Vehicle-to-everything (V2X) refers to a communication technology for exchanging information with other vehicles, pedestrians, and infrastructure-built objects through wired/wireless communication. V2X may be divided into four types: vehicle-to-vehicle (V2V), vehicle-to-infrastructure (V2I), vehicle-to-network (V2N), and vehicle-to-pedestrian (V2P). V2X communication may be provided through a PC5 interface and/or a Uu interface.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive MTC, and Ultra-Reliable and Low Latency Communication (URLLC) may be referred to as new radio access technology (RAT) or new radio (NR). Even in NR, V2X communication may be supported.

Techniques described herein may be used in various wireless access systems such as code division multiple access (CDMA), frequency division multiple access (FDMA), time division multiple access (TDMA), orthogonal frequency division multiple access (OFDMA), single carrier-frequency division multiple access (SC-FDMA), etc. CDMA may be implemented as a radio technology such as universal terrestrial radio access (UTRA) or CDMA2000. TDMA may be implemented as a radio technology such as global system for mobile communications (GSM)/general packet radio service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, evolved-UTRA (E-UTRA) etc. UTRA is a part of universal mobile telecommunications system (UMTS). 3GPP LTE is a part of Evolved UMTS (E-UMTS) using E-UTRA. 3GPP LTE employs OFDMA for downlink and SC-FDMA for uplink. LTE-A is an evolution of 3GPP LTE. 3GPP NR (New Radio or New Radio Access Technology) is an evolved version of 3GPP LTE/LTE-A/LTE-A pro.

5G NR is a successor technology of LTE-A, and is a new clean-slate mobile communication system with characteristics such as high performance, low latency, and high availability. 5G NR may utilize all available spectrum resources, from low frequency bands below 1 GHz to intermediate frequency bands from 1 GHz to 10 GHz and high frequency (millimeter wave) bands above 24 GHz.

For clarity of explanation, LTE-A or 5G NR is mainly described, but the embodiment(s) is not limited thereto.

FIG. 1 is a diagram for explaining and comparing RAT-based V2X communication before NR with NR-based V2X communication.

FIG. 1 is a diagram for explaining and comparing RAT-based V2X communication before NR with NR-based V2X communication.

Regarding V2X communication, in RAT prior to NR, a scheme for providing a safety service based on V2X messages such as a basic safety message (BSM), a cooperative awareness message (CAM), and a decentralized environmental notification message (DENM) was mainly discussed. The V2X message may include location information, dynamic information, and attribute information. For example, the UE may transmit a periodic message type CAM and/or an event triggered message type DENM to another UE.

For example, the CAM may include dynamic state information about a vehicle such as direction and speed, vehicle static data such as dimensions, and basic vehicle information such as external lighting conditions and route details. For example, a UE may broadcast the CAM, and the CAM latency may be less than 100 ms. For example, when an unexpected situation such as a breakdown of the vehicle or an accident occurs, the UE may generate a DENM and transmit the same to another UE. For example, all vehicles within the transmission coverage of the UE may receive the CAM and/or DENM. In this case, the DENM may have a higher priority than the CAM.

Regarding V2X communication, various V2X scenarios have been subsequently introduced in NR. For example, the various V2X scenarios may include vehicle platooning, advanced driving, extended sensors, and remote driving.

For example, based on vehicle platooning, vehicles may dynamically form a group and move together. For example, to perform platoon operations based on vehicle platooning, vehicles belonging to the group may receive periodic data from a leading vehicle. For example, the vehicles belonging to the group may reduce or increase the distance between the vehicles based on the periodic data.

For example, based on advanced driving, a vehicle may be semi-automated or fully automated. For example, each vehicle may adjust trajectories or maneuvers based on data acquired from local sensors of nearby vehicles and/or nearby logical entities. Also, for example, each vehicle may share driving intention with nearby vehicles.

For example, on the basis of extended sensors, raw data or processed data acquired through local sensors, or live video data may be exchanged between a vehicle, a logical entity, UEs of pedestrians and/or a V2X application server. Thus, for example, the vehicle may recognize an environment that is improved over an environment that may be detected using its own sensor.

For example, for a person who cannot drive or a remote vehicle located in a dangerous environment, a remote driver or V2X application may operate or control the remote vehicle based on remote driving. For example, when a route is predictable as in the case of public transportation, cloud computing-based driving may be used to operate or control the remote vehicle. For example, access to a cloud-based back-end service platform may be considered for remote driving.

In the NR V2X system, positioning-related control information needs to be efficiently provided to perform sidelink positioning between UEs or between a UE and an anchor node (AN).

Sidelink positioning may be used for positioning between vehicles. For vehicle safety, reliable positioning information needs to be provided between vehicles. In addition, positioning control information needs to be provided efficiently in consideration of various factors affecting positioning.

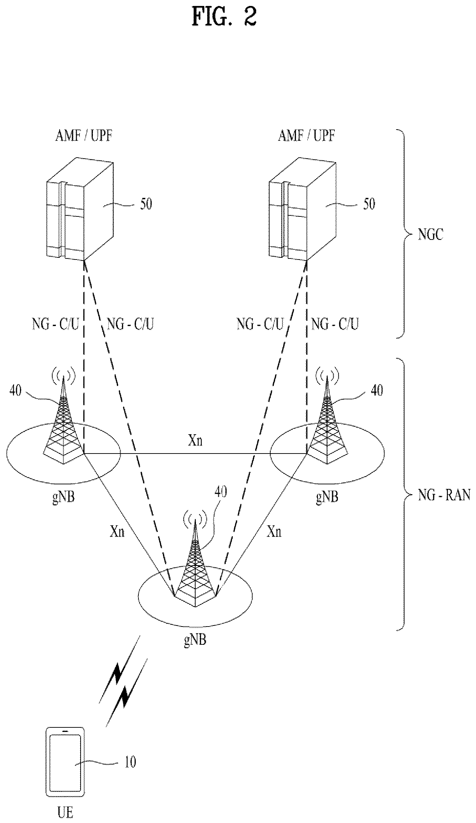

FIG. 2 illustrates the structure of a NR system.

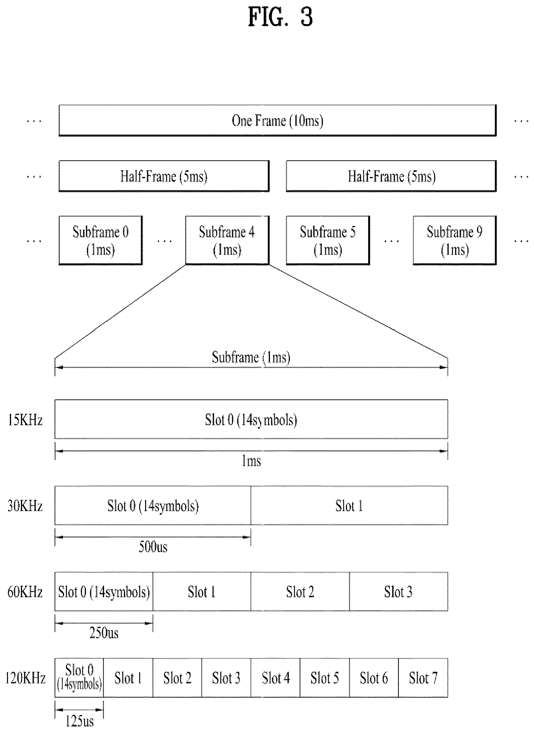

Referring to FIG. 2, a next generation radio access network (NG-RAN) may include a next generation Node B (gNB) and/or an eNB, which provides user-plane and control-plane protocol termination to a UE. In FIG. 3, the NG-RAN is shown as including only gNBs, by way of example. A gNB and an eNB are connected to each other via an Xn interface. The gNB and the eNB are connected to a 5G core network (5GC) via an NG interface. More specifically, the gNB and the eNB are connected to an access and mobility management function (AMF) via an NG-C interface and to a user plane function (UPF) via an NG-U interface.

The gNB and/or eNB may provide functions such as inter-cell radio resource management (RRM), radio bearer (RB) management, connection mobility control, radio admission control, Measurement configuration & Provision, and dynamic resource allocation. AMF can provide functions such as NAS security and idle state mobility handling. UPF may provide functions such as mobility anchoring and PDU processing. Session Management Function (SMF) may provide functions such as terminal IP address allocation and PDU session control.

FIG. 3 illustrates the structure of a NR radio frame to which the present disclosure is applicable.

Referring to FIG. 3, a radio frame may be used for UL transmission and DL transmission in NR. A radio frame is 10 ms in length, and may be defined by two 5-ms half-frames. An HF may include five 1-ms subframes. A subframe may be divided into one or more slots, and the number of slots in an SF may be determined according to a subcarrier spacing (SCS). Each slot may include 12 or 14 OFDM(A) symbols according to a cyclic prefix (CP).

In a normal CP (NCP) case, each slot may include 14 symbols, whereas in an extended CP (ECP) case, each slot may include 12 symbols. Herein, a symbol may be an OFDM symbol (or CP-OFDM symbol) or an SC-FDMA symbol (or DFT-s-OFDM symbol).

Table 1 below lists the number of symbols per slot N^{slot}_{symb}, the number of slots per frame *N^{frame,u}ₛₗₒₜ,* and the number of slots per subframe *N^{subframe,u}ₛₗₒₜ* according to an SCS configuration µ in the NCP case.

**[Table 1]**

| SCS (15*2u) | N^{slot}_{symb} | N^{frame,u}ₛₗₒₜ | N^{subframe,u}ₛₗₒₜ |
|---|---|---|---|
| 15 kHz (u=0) | 14 | 10 | 1 |
| 30 kHz (u=1) | 14 | 20 | 2 |
| 60 kHz (u=2) | 14 | 40 | 4 |
| 120 kHz (u=3) | 14 | 80 | 8 |
| 240 kHz (u=4) | 14 | 160 | 16 |

Table 2 below lists the number of symbols per slot, the number of slots per frame, and the number of slots per subframe according to an SCS in the ECP case.

**[Table 2]**

| SCS (15*2^u) | N^{slot}_{symb} | N^{frame,u}ₛₗₒₜ | N^{subframe,u}ₛₗₒₜ |
|---|---|---|---|
| 60 kHz (u=2) | 12 | 40 | 4 |

In the NR system, different OFDM(A) numerologies (e.g., SCSs, CP lengths, etc.) may be configured for a plurality of cells aggregated for one UE. Thus, the (absolute) duration of a time resource (e.g., SF, slot, or TTI) including the same number of symbols may differ between the aggregated cells (such a time resource is commonly referred to as a time unit (TU) for convenience of description). In NR, multiple numerologies or SCSs to support various 5G services may be supported. For example, a wide area in conventional cellular bands may be supported when the SCS is 15 kHz, and a dense urban environment, lower latency, and a wider carrier bandwidth may be supported when the SCS is 30 kHz/60 kHz. When the SCS is 60 kHz or higher, a bandwidth wider than 24.25 GHz may be supported to overcome phase noise.

The NR frequency band may be defined as two types of frequency ranges. The two types of frequency ranges may be FR1 and FR2. The numerical values of the frequency ranges may be changed. For example, the two types of frequency ranges may be configured as shown in Table 3 below. Among the frequency ranges used in the NR system, FR1 may represent "sub 6 GHz range" and FR2 may represent "above 6 GHz range" and may be called millimeter wave (mmW).

**[Table 3]**

| Frequency Range designation | Corresponding frequency range | Subcarrier Spacing (SCS) |
|---|---|---|
| FR1 | 450 MHz - 6000 MHz | 15, 30, 60 kHz |
| FR2 | 24250 MHz - 52600 MHz | 60, 120, 240 kHz |

As mentioned above, the numerical values of the frequency ranges of the NR system may be changed. For example, FR1 may include a band of 410 MHz to 7125 MHz as shown in Table 4 below. That is, FR1 may include a frequency band of 6 GHz (or 5850 MHz, 5900 MHz, 5925 MHz, etc.) or higher. For example, the frequency band of 6 GHz (or 5850 MHz, 5900 MHz, 5925 MHz, etc.) or higher included in FR1 may include an unlicensed band. The unlicensed band may be used for various purposes, for example, for communication for vehicles (e.g., autonomous driving).

**[Table 4]**

| Frequency Range designation | Corresponding frequency range | Subcarrier Spacing (SCS) |
|---|---|---|
| FR1 | 410 MHz - 7125 MHz | 15, 30, 60 kHz |
| FR2 | 24250 MHz - 52600 MHz | 60, 120, 240 kHz |

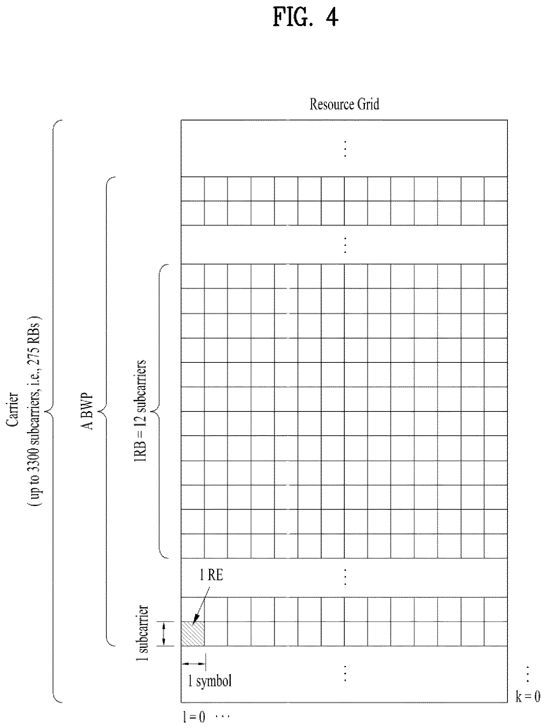

FIG. 4 illustrates the slot structure of a NR frame to which the present disclosure is applicable.

Referring to FIG. 4, one slot includes a plurality of symbols in the time domain. For example, one slot may include 14 symbols in a normal CP and 12 symbols in an extended CP. Alternatively, one slot may include 7 symbols in the normal CP and 6 symbols in the extended CP.

A carrier may include a plurality of subcarriers in the frequency domain. A resource block (RB) is defined as a plurality of consecutive subcarriers (e.g., 12 subcarriers) in the frequency domain. A bandwidth part (BWP) may be defined as a plurality of consecutive (P)RBs in the frequency domain, and the BWP may correspond to one numerology (e.g., SCS, CP length, etc.). The carrier may include up to N (e.g., 5) BWPs. Data communication may be conducted in an activated BWP. In a resource grid, each element may be referred to as a resource element (RE) and may be mapped to one complex symbol.

The wireless interface between UEs or the wireless interface between a UE and a network may be composed of an L1 layer, an L2 layer, and an L3 layer. In various embodiments of the present disclosure, the L1 layer may represent a physical layer. The L2 layer may represent, for example, at least one of a MAC layer, an RLC layer, a PDCP layer, and an SDAP layer. The L3 layer may represent, for example, a radio resource control (RRC) layer.

Hereinafter, V2X or sidelink (SL) communication will be described.

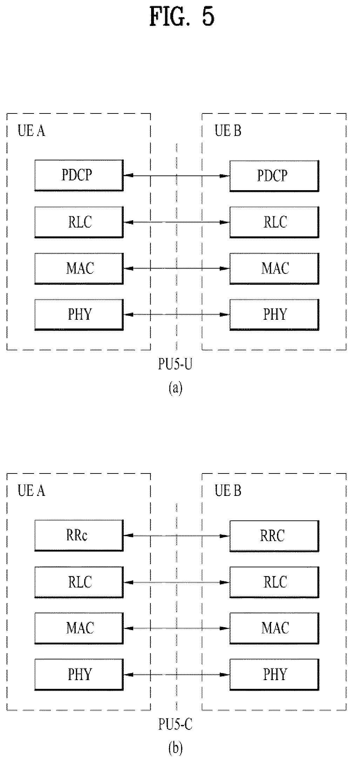

FIG. 5 illustrates a radio protocol architecture for SL communication. Specifically, FIG. 5-(a) shows a user plane protocol stack of NR, and FIG. 5-(b) shows a control plane protocol stack of NR.

Hereinafter, a sidelink synchronization signal (SLSS) and synchronization information will be described.

The SLSS is an SL-specific sequence, and may include a primary sidelink synchronization signal (PSSS) and a secondary sidelink synchronization signal (SSSS). The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, the UE may detect an initial signal and acquire synchronization using the S-PSS. For example, the UE may acquire detailed synchronization using the S-PSS and the S-SSS, and may detect a synchronization signal ID.

A physical sidelink broadcast channel (PSBCH) may be a (broadcast) channel on which basic (system) information that the UE needs to know first before transmission and reception of an SL signal is transmitted. For example, the basic information may include SLSS related information, a duplex mode (DM), time division duplex uplink/downlink (TDD UL/DL) configuration, resource pool related information, the type of an application related to the SLSS, a subframe offset, and broadcast information. For example, for evaluation of PSBCH performance, the payload size of PSBCH in NR V2X may be 56 bits including CRC of 24 bits.

The S-PSS, S-SSS, and PSBCH may be included in a block format (e.g., an SL synchronization signal (SS)/PSBCH block, hereinafter sidelink-synchronization signal block (S-SSB)) supporting periodic transmission. The S-SSB may have the same numerology (i.e., SCS and CP length) as a physical sidelink control channel (PSCCH)/physical sidelink shared channel (PSSCH) in the carrier, and the transmission bandwidth thereof may be within a (pre)set sidelink BWP (SL BWP). For example, the bandwidth of the S-SSB may be 11 resource blocks (RBs). For example, the PSBCH may span 11 RBs. The frequency position of the S-SSB may be (pre)set. Accordingly, the UE does not need to perform hypothesis detection at a frequency to discover the S-SSB in the carrier.

In the NR SL system, a plurality of numerologies having different SCSs and/or CP lengths may be supported. In this case, as the SCS increases, the length of the time resource in which the transmitting UE transmits the S-SSB may be shortened. Thereby, the coverage of the S-SSB may be narrowed. Accordingly, in order to guarantee the coverage of the S-SSB, the transmitting UE may transmit one or more S-SSBs to the receiving UE within one S-SSB transmission period according to the SCS. For example, the number of S-SSBs that the transmitting UE transmits to the receiving UE within one S-SSB transmission period may be pre-configured or configured for the transmitting UE. For example, the S-SSB transmission period may be 160 ms. For example, for all SCSs, the S-SSB transmission period of 160 ms may be supported.

For example, when the SCS is 15 kHz in FR1, the transmitting UE may transmit one or two S-SSBs to the receiving UE within one S-SSB transmission period. For example, when the SCS is 30 kHz in FR1, the transmitting UE may transmit one or two S-SSBs to the receiving UE within one S-SSB transmission period. For example, when the SCS is 60 kHz in FR1, the transmitting UE may transmit one, two, or four S-SSBs to the receiving UE within one S-SSB transmission period.

For example, when the SCS is 60 kHz in FR2, the transmitting UE may transmit 1, 2, 4, 8, 16 or 32 S-SSBs to the receiving UE within one S-SSB transmission period. For example, when SCS is 120 kHz in FR2, the transmitting UE may transmit 1, 2, 4, 8, 16, 32 or 64 S-SSBs to the receiving UE within one S-SSB transmission period.

When the SCS is 60 kHz, two types of CPs may be supported. In addition, the structure of the S-SSB transmitted from the transmitting UE to the receiving UE may depend on the CP type. For example, the CP type may be normal CP (NCP) or extended CP (ECP). Specifically, for example, when the CP type is NCP, the number of symbols to which the PSBCH is mapped in the S-SSB transmitted by the transmitting UE may be 9 or 8. On the other hand, for example, when the CP type is ECP, the number of symbols to which the PSBCH is mapped in the S-SSB transmitted by the transmitting UE may be 7 or 6. For example, the PSBCH may be mapped to the first symbol in the S-SSB transmitted by the transmitting UE. For example, upon receiving the S-SSB, the receiving UE may perform an automatic gain control (AGC) operation in the period of the first symbol for the S-SSB.

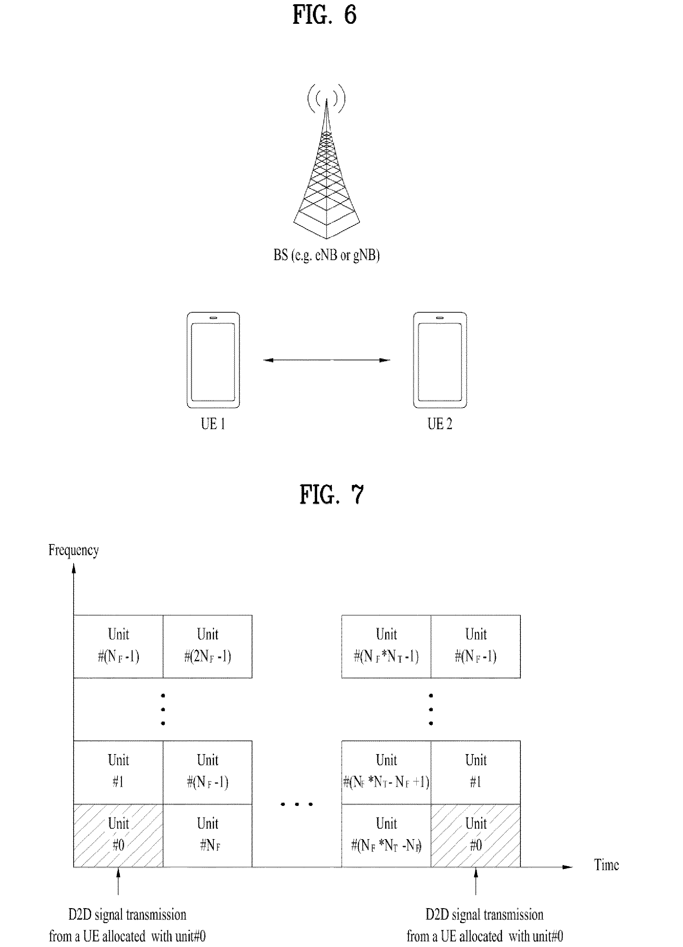

FIG. 6 illustrates UEs performing V2X or SL communication.

Referring to FIG. 6, in V2X or SL communication, the term UE may mainly refer to a user's UE. However, when network equipment such as a BS transmits and receives signals according to a communication scheme between UEs, the BS may also be regarded as a kind of UE. For example, UE 1 may be the first device 100, and UE 2 may be the second device 200.

For example, UE 1 may select a resource unit corresponding to a specific resource in a resource pool, which represents a set of resources. Then, UE 1 may transmit an SL signal through the resource unit. For example, UE 2, which is a receiving UE, may receive a configuration of a resource pool in which UE 1 may transmit a signal, and may detect a signal of UE 1 in the resource pool.

Here, when UE 1 is within the connection range of the BS, the BS may inform UE 1 of a resource pool. On the other hand, when the UE 1 is outside the connection range of the BS, another UE may inform UE 1 of the resource pool, or UE 1 may use a preconfigured resource pool.

In general, the resource pool may be composed of a plurality of resource units, and each UE may select one or multiple resource units and transmit an SL signal through the selected units.

FIG. 7 illustrates resource units for V2X or SL communication.

Referring to FIG. 7, the frequency resources of a resource pool may be divided into NF sets, and the time resources of the resource pool may be divided into NT sets. Accordingly, a total of NF * NT resource units may be defined in the resource pool. FIG. 7 shows an exemplary case where the resource pool is repeated with a periodicity of NT subframes.

As shown in FIG. 7, one resource unit (e.g., Unit #0) may appear periodically and repeatedly. Alternatively, in order to obtain a diversity effect in the time or frequency dimension, an index of a physical resource unit to which one logical resource unit is mapped may change in a predetermined pattern over time. In this structure of resource units, the resource pool may represent a set of resource units available to a UE which intends to transmit an SL signal.

Resource pools may be subdivided into several types. For example, according to the content in the SL signal transmitted in each resource pool, the resource pools may be divided as follows.
(1) Scheduling assignment (SA) may be a signal including information such as a position of a resource through which a transmitting UE transmits an SL data channel, a modulation and coding scheme (MCS) or multiple input multiple output (MIMO) transmission scheme required for demodulation of other data channels, and timing advance (TA). The SA may be multiplexed with SL data and transmitted through the same resource unit. In this case, an SA resource pool may represent a resource pool in which SA is multiplexed with SL data and transmitted. The SA may be referred to as an SL control channel.
(2) SL data channel (physical sidelink shared channel (PSSCH)) may be a resource pool through which the transmitting UE transmits user data. When the SA and SL data are multiplexed and transmitted together in the same resource unit, only the SL data channel except for the SA information may be transmitted in the resource pool for the SL data channel. In other words, resource elements (REs) used to transmit the SA information in individual resource units in the SA resource pool may still be used to transmit the SL data in the resource pool of the SL data channel. For example, the transmitting UE may map the PSSCH to consecutive PRBs and transmit the same.
(3) The discovery channel may be a resource pool used for the transmitting UE to transmit information such as the ID thereof. Through this channel, the transmitting UE may allow a neighboring UE to discover the transmitting UE.

Even when the SL signals described above have the same content, they may use different resource pools according to the transmission/reception properties of the SL signals. For example, even when the SL data channel or discovery message is the same among the signals, it may be classified into different resource pools according to determination of the SL signal transmission timing (e.g., transmission at the reception time of the synchronization reference signal or transmission by applying a predetermined TA at the reception time), a resource allocation scheme (e.g., the BS designates individual signal transmission resources to individual transmitting UEs or individual transmission UEs select individual signal transmission resources within the resource pool), signal format (e.g., the number of symbols occupied by each SL signal in a subframe, or the number of subframes used for transmission of one SL signal), signal strength from a BS, the strength of transmit power of an SL UE, and the like.

Hereinafter, resource allocation in the SL will be described.

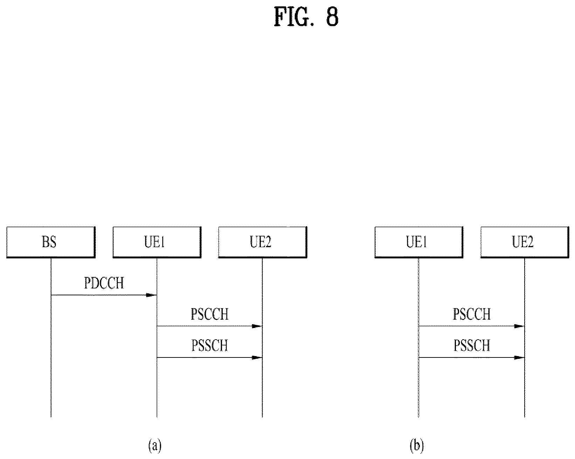

FIG. 8 illustrates a procedure in which UEs perform V2X or SL communication according to a transmission mode. In various embodiments of the present disclosure, the transmission mode may be referred to as a mode or a resource allocation mode. Hereinafter, for simplicity, the transmission mode in LTE may be referred to as an LTE transmission mode, and the transmission mode in NR may be referred to as an NR resource allocation mode.

For example, FIG. 8-(a) illustrates a UE operation related to LTE transmission mode 1 or LTE transmission mode 3. Alternatively, for example, FIG. 8-(a) illustrates a UE operation related to NR resource allocation mode 1. For example, LTE transmission mode 1 may be applied to general SL communication, and LTE transmission mode 3 may be applied to V2X communication.

For example, FIG. 8-(b) illustrates a UE operation related to LTE transmission mode 2 or LTE transmission mode 4. Alternatively, for example, FIG. 8-(b) illustrates a UE operation related to NR resource allocation mode 2.

Referring to FIG. 8-(a), in LTE transmission mode 1, LTE transmission mode 3 or NR resource allocation mode 1, the BS may schedule an SL resource to be used by the UE for SL transmission. For example, the BS may perform resource scheduling for UE 1 through PDCCH (more specifically, downlink control information (DCI)), and UE 1 may perform V2X or SL communication with UE 2 according to the resource scheduling. For example, UE 1 may transmit sidelink control information (SCI) to UE 2 on a physical sidelink control channel (PSCCH), and then transmit data which is based on the SCI to UE 2 on a physical sidelink shared channel (PSSCH).

For example, in NR resource allocation mode 1, the UE may be provided with or allocated resources for one or more SL transmissions of a transport block (TB) from the BS through a dynamic grant. For example, the BS may provide a resource for transmission of the PSCCH and/or PSSCH to the UE using the dynamic grant. For example, the transmitting UE may report the SL hybrid automatic repeat request (HARQ) feedback received from the receiving UE to the BS. In this case, the PUCCH resource and timing for reporting the SL HARQ feedback to the BS may be determined based on an indication in the PDCCH through the BS is to allocate a resource for SL transmission.

For example, DCI may include a slot offset between DCI reception and the first SL transmission scheduled by the DCI. For example, the minimum gap between the DCI scheduling a SL transmission resource and the first scheduled SL transmission resource may not be shorter than the processing time of the corresponding UE.

For example, in NR resource allocation mode 1, the UE may be periodically provided with or allocated a resource set from the BS for a plurality of SL transmissions through a configured grant. For example, the configured grant may include configured grant type 1 or configured grant type 2. For example, the UE may determine a TB to be transmitted on each occasion indicated by a given configured grant.

For example, the BS may allocate SL resources to the UE on the same carrier, and may allocate SL resources to the UE on different carriers.

For example, an NR BS may control LTE-based SL communication. For example, the NR BS may transmit NR DCI to the UE to schedule an LTE SL resource. In this case, for example, a new RNTI for scrambling the NR DCI may be defined. For example, the UE may include an NR SL module and an LTE SL module.

For example, after the UE including the NR SL module and the LTE SL module receives NR SL DCI from the gNB, the NR SL module may transform the NR SL DCI to LTE DCI type 5A, and the NR SL module may deliver LTE DCI type 5A to the LTE SL module in units of X ms. For example, the LTE SL module may apply activation and/or release to the first LTE subframe Z ms after the LTE SL module receives LTE DCI format 5A from the NR SL module. For example, the X may be dynamically indicated using a field of DCI. For example, the minimum value of X may depend on the UE capability. For example, the UE may report a single value according to the UE capability. For example, X may be a positive number.

Referring to FIG. 8(b), in LTE transmission mode 2, LTE transmission mode 4, or NR resource allocation mode 2, the UE may determine AN SL resource within the SL resources configured by the BS/network or the preconfigured SL resources. For example, the configured SL resources or the preconfigured SL resources may be a resource pool. For example, the UE may autonomously select or schedule a resource for SL transmission. For example, the UE may autonomously select a resource within the configured resource pool to perform SL communication. For example, the UE may select a resource within a selection window by performing a sensing and resource (re)selection procedure. For example, the sensing may be performed on a per sub-channel basis. In addition, UE 1, which has selected a resource within the resource pool, may transmit SCI to UE 2 through the PSCCH, and then transmit data, which is based on the SCI, to UE 2 through the PSSCH.

For example, a UE may assist in selecting an SL resource for another UE. For example, in NR resource allocation mode 2, the UE may receive a configured grant for SL transmission. For example, in NR resource allocation mode 2, the UE may schedule SL transmission of another UE. For example, in NR resource allocation mode 2, the UE may reserve an SL resource for blind retransmission.

For example, in NR resource allocation mode 2, UE 1 may indicate the priority of SL transmission to UE 2 using the SCI. For example, UE 2 may decode the SCI. UE 2 may perform sensing and/or resource (re)selection based on the priority. For example, the resource (re)selection procedure may include an operation of identifying candidate resources in a resource selection window by UE 2, and an operation of selecting, by UE 2, a resource for (re)transmission from among the identified candidate resources. For example, the resource selection window may be a time interval during which the UE selects the resource for SL transmission. For example, after UE 2 triggers resource (re)selection, the resource selection window may start at T1 ≥ 0. The resource selection window may be limited by the remaining packet delay budget of UE 2. For example, in the operation of identifying the candidate resources in the resource selection window by UE 2, a specific resource may be indicated by the SCI received by UE 2 from UE 1. When the L1 SL RSRP measurement value for the specific resource exceeds an SL RSRP threshold, UE 2 may not determine the specific resource as a candidate resource. For example, the SL RSRP threshold may be determined based on the priority of the SL transmission indicated by the SCI received by UE 2 from UE 1 and the priority of the SL transmission on the resource selected by UE 2.

For example, the L1 SL RSRP may be measured based on an SL demodulation reference signal (DMRS). For example, one or more PSSCH DMRS patterns may be configured or preconfigured for each resource pool in the time domain. For example, PDSCH DMRS configuration type 1 and/or type 2 may be the same as or similar to the frequency domain pattern of the PSSCH DMRS. For example, the exact DMRS pattern may be indicated by the SCI. For example, in NR resource allocation mode 2, the transmitting UE may select a specific DMRS pattern from among DMRS patterns configured or preconfigured for the resource pool.

For example, in NR resource allocation mode 2, based on the sensing and resource (re)selection procedure, the transmitting UE may perform initial transmission of a TB without reservation. For example, based on the sensing and resource (re)selection procedure, using the SCI associated with a first TB, the transmitting UE may reserve the SL resource for initial transmission of a second TB.

For example, in NR resource allocation mode 2, the UE may reserve a resource for feedback-based PSSCH retransmission through signaling related to previous transmission of the same TB. For example, the maximum number of SL resources reserved by one transmission including the current transmission may be 2, 3, or 4. For example, the maximum number of SL resources may be the same regardless of whether HARQ feedback is enabled. For example, the maximum number of HARQ (re)transmissions for one TB may be limited by configuration or pre-configuration. For example, the maximum number of HARQ (re)transmissions may be up to 32. For example, when the configuration or pre-configuration is not present, the maximum number of HARQ (re)transmissions may be unspecified. For example, the configuration or pre-configuration may be for the transmitting UE. For example, in NR resource allocation mode 2, HARQ feedback for releasing resources not used by the UE may be supported.

For example, in NR resource allocation mode 2, the UE may indicate to another UE one or more sub-channels and/or slots used by the UE, using the SCI. For example, the UE may indicate to another UE one or more sub-channels and/or slots reserved by the UE for PSSCH (re)transmission, using SCI. For example, the minimum allocation unit of the SL resource may be a slot. For example, the size of the sub-channel may be configured for the UE or may be preconfigured.

Hereinafter, sidelink control information (SCI) will be described.

Control information transmitted by the BS to the UE on the PDCCH may be referred to as downlink control information (DCI), whereas control information transmitted by the UE to another UE on the PSCCH may be referred to as SCI. For example, before decoding the PSCCH, the UE may be aware of the start symbol of the PSCCH and/or the number of symbols of the PSCCH. For example, the SCI may include SL scheduling information. For example, the UE may transmit at least one SCI to another UE to schedule the PSSCH. For example, one or more SCI formats may be defined.

For example, the transmitting UE may transmit the SCI to the receiving UE on the PSCCH. The receiving UE may decode one SCI to receive the PSSCH from the transmitting UE.

For example, the transmitting UE may transmit two consecutive SCIs (e.g., 2-stage SCI) to the receiving UE on the PSCCH and/or the PSSCH. The receiving UE may decode the two consecutive SCIs (e.g., 2-stage SCI) to receive the PSSCH from the transmitting UE. For example, when the SCI configuration fields are divided into two groups in consideration of the (relatively) high SCI payload size, the SCI including a first SCI configuration field group may be referred to as first SCI or 1st SCI, and the SCI including a second SCI configuration field group may be referred to as second SCI or 2nd SCI. For example, the transmitting UE may transmit the first SCI to the receiving UE on the PSCCH. For example, the transmitting UE may transmit the second SCI to the receiving UE on the PSCCH and/or the PSSCH. For example, the second SCI may be transmitted to the receiving UE on the (independent) PSCCH, or may be piggybacked together with data and transmitted on the PSSCH. For example, the two consecutive SCIs may be applied for different transmissions (e.g., unicast, broadcast, or groupcast).

For example, the transmitting UE may transmit some or all of the following information to the receiving UE through SCI. Here, for example, the transmitting UE may transmit some or all of the following information to the receiving UE through the first SCI and/or the second SCI:
- PSSCH and/or PSCCH related resource allocation information, for example, the positions/number of time/frequency resources, resource reservation information (e.g., periodicity); and/or
- SL CSI report request indicator or SL (L1) RSRP (and/or SL (L1) RSRQ and/or SL (L1) RSSI) report request indicator; and/or
- SL CSI transmission indicator (or SL (L1) RSRP (and/or SL (L1) RSRQ and/or SL (L1) RSSI) information transmission indicator) (on PSSCH); and/or
- MCS information; and/or
- transmit power information; and/or
- L1 destination ID information and/or L1 source ID information; and/or
- SL HARQ process ID information; and/or
- new data indicator (NDI) information; and/or
- redundancy version (RV) information; and/or
- (transmission traffic/packet related) QoS information; e.g., priority information; and/or
- SL CSI-RS transmission indicator or information on the number of (transmitted) SL CSI-RS antenna ports;
- Location information about the transmitting UE or location (or distance/area) information about a target receiving UE (to which a request for SL HARQ feedback is made); and/or
- information about a reference signal (e.g., DMRS, etc.) related to decoding and/or channel estimation of data transmitted on the PSSCH, for example, information related to a pattern of a (time-frequency) mapping resource of DMRS, rank information, antenna port index information.

For example, the first SCI may include information related to channel sensing. For example, the receiving UE may decode the second SCI using the PSSCH DMRS. A polar code used for the PDCCH may be applied to the second SCI. For example, in the resource pool, the payload size of the first SCI may be the same for unicast, groupcast and broadcast. After decoding the first SCI, the receiving UE does not need to perform blind decoding of the second SCI. For example, the first SCI may include scheduling information about the second SCI.

In various embodiments of the present disclosure, since the transmitting UE may transmit at least one of SCI, the first SCI, and/or the second SCI to the receiving UE on the PSCCH, the PSCCH may be replaced/substituted with at least one of the SCI, the first SCI, and/or the second SCI. Additionally/alternatively, for example, the SCI may be replaced/substituted with at least one of the PSCCH, the first SCI, and/or the second SCI. Additionally/alternatively, for example, since the transmitting UE may transmit the second SCI to the receiving UE on the PSSCH, the PSSCH may be replaced/substituted with the second SCI.

Hereinafter, synchronization acquisition by an SL UE will be described.

In TDMA and FDMA systems, accurate time and frequency synchronization is essential. Inaccurate time and frequency synchronization may lead to degradation of system performance due to inter-symbol interference (ISI) and inter-carrier interference (ICI). The same is true for V2X. For time/frequency synchronization in V2X, a sidelink synchronization signal (SLSS) may be used in the PHY layer, and master information block-sidelink-V2X (MIB-SL-V2X) may be used in the RLC layer.

### Tx/Rx beam sweep

In case of using a very high frequency such as mmWave, beamforming may be used to overcome pathloss in general. To use beamforming, a best beam pair should be detected from several beam pairs between a Tx end and an Rx end. Such a process may be referred as beam acquisition or beam tracking from the perspective of the Rx end. Particularly, since mmWave uses analog beamforming, a vehicle may need to perform beam sweeping of switching a beam to a different direction in a different time using an antenna array of the vehicle in the course of beam acquisition or beam tracking.

### Multiple active sidelink BWPs

In NR V2X, communication based on supporting a plurality of BWPs (i.e., communication based on supporting a plurality of configured sidelink BWPs and/or communication through supporting a plurality of active sidelink BWPs) may be considered. The reason why the above-described operation is performed is to support heterogeneous services/communications that require different numerologies, parameters and/or requirements, or is to reduce ICI caused by a shortened CP length.

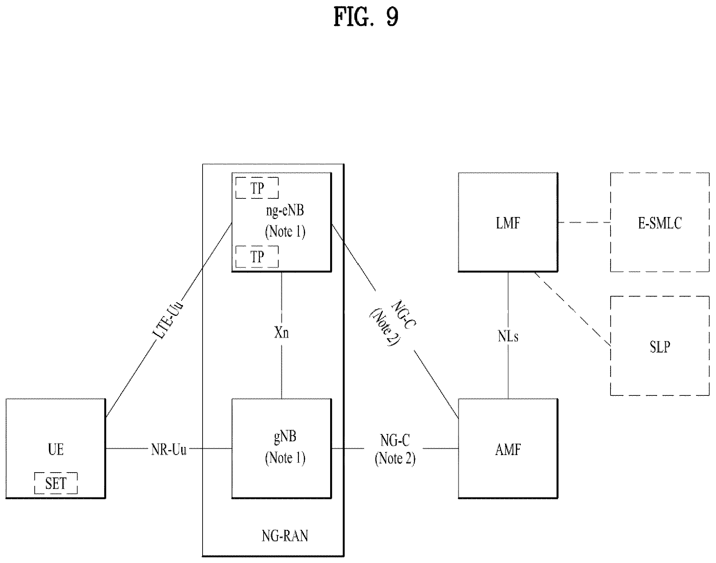

FIG. 9 illustrates architecture of a 5G system applicable to positioning of a UE connected to an NG-RAN or an E-UTRAN.

Referring to FIG. 9, an AMF may receive a request for a location service associated with a particular target UE from another entity such as a gateway mobile location center (GMLC) or the AMF itself decides to initiate the location service on behalf of the particular target UE. Then, the AMF transmits a request for a location service to a location management function (LMF). Upon receiving the request for the location service, the LMF may process the request for the location service and then returns the processing result including the estimated position of the UE to the AMF. In the case of a location service requested by an entity such as the GMLC other than the AMF, the AMF may transmit the processing result received from the LMF to this entity.

A new generation evolved-NB (ng-eNB) and a gNB are network elements of the NG-RAN capable of providing a measurement result for positioning. The ng-eNB and the gNB may measure radio signals for a target UE and transmits a measurement result value to the LMF. The ng-eNB may control several transmission points (TPs), such as remote radio heads, or PRS-only TPs for support of a PRS-based beacon system for E-UTRA.

The LMF is connected to an enhanced serving mobile location center (E-SMLC) which may enable the LMF to access the E-UTRAN. For example, the E-SMLC may enable the LMF to support observed time difference of arrival (OTDOA), which is one of positioning methods of the E-UTRAN, using DL measurement obtained by a target UE through signals transmitted by eNBs and/or PRS-only TPs in the E-UTRAN.

The LMF may be connected to an SUPL location platform (SLP). The LMF may support and manage different location services for target UEs. The LMF may interact with a serving ng-eNB or a serving gNB for a target UE in order to obtain position measurement for the UE. For positioning of the target UE, the LMF may determine positioning methods, based on a location service (LCS) client type, required quality of service (QoS), UE positioning capabilities, gNB positioning capabilities, and ng-eNB positioning capabilities, and then apply these positioning methods to the serving gNB and/or serving ng-eNB. The LMF may determine additional information such as accuracy of the location estimate and velocity of the target UE. The SLP is a secure user plane location (SUPL) entity responsible for positioning over a user plane.

The UE may measure the position thereof using DL RSs transmitted by the NG-RAN and the E-UTRAN. The DL RSs transmitted by the NG-RAN and the E-UTRAN to the UE may include a SS/PBCH block, a CSI-RS, and/or a PRS. Which DL RS is used to measure the position of the UE may conform to configuration of LMF/E-SMLC/ng-eNB/E-UTRAN etc. The position of the UE may be measured by an RAT-independent scheme using different global navigation satellite systems (GNSSs), terrestrial beacon systems (TBSs), WLAN access points, Bluetooth beacons, and sensors (e.g., barometric sensors) installed in the UE. The UE may also contain LCS applications or access an LCS application through communication with a network accessed thereby or through another application contained therein. The LCS application may include measurement and calculation functions needed to determine the position of the UE. For example, the UE may contain an independent positioning function such as a global positioning system (GPS) and report the position thereof, independent of NG-RAN transmission. Such independently obtained positioning information may be used as assistance information of positioning information obtained from the network.

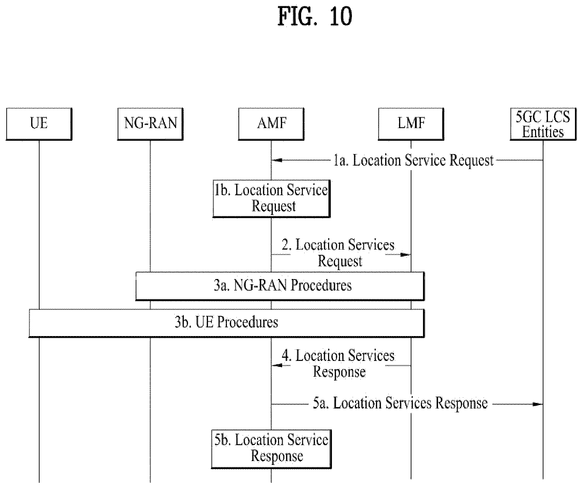

FIG. 10 illustrates an implementation example of a network for UE positioning.

When an AMF receives a request for a location service in the case in which the UE is in connection management (CM)-IDLE state, the AMF may make a request for a network triggered service in order to establish a signaling connection with the UE and to assign a specific serving gNB or ng-eNB. This operation procedure is omitted in FIG. 7. In other words, in FIG. 7, it may be assumed that the UE is in a connected mode. However, the signaling connection may be released by an NG-RAN as a result of signaling and data inactivity while a positioning procedure is still ongoing.

An operation procedure of the network for UE positioning will now be described in detail with reference to FIG. 10. In step 1a, a 5GC entity such as GMLC may transmit a request for a location service for measuring the position of a target UE to a serving AMF. Here, even when the GMLC does not make the request for the location service, the serving AMF may determine the need for the location service for measuring the position of the target UE according to step 1b. For example, the serving AMF may determine that itself will perform the location service in order to measure the position of the UE for an emergency call.

In step 2, the AMF transfers the request for the location service to an LMF. In step 3a, the LMF may initiate location procedures with a serving ng-eNB or a serving gNB to obtain location measurement data or location measurement assistance data. Additionally, in step 3b, the LMF may initiate a location procedure for DL positioning together with the UE. For example, the LMF may transmit the location assistance data to the UE or obtain a location estimate or location measurement value. Meanwhile, step 3b may be additionally performed after step 3a is performed, but may be performed instead of step 3a.

In step 4, the LMF may provide a location service response to the AMF. The location service response may include information as to whether UE positioning is successful and include a location estimate value of the UE. If the procedure of FIG. 7 has been initiated by step 1a, the AMF may transfer the location service response to a 5GC entity such as a GMLC. If the procedure of FIG. 7 has been initiated by step 1b, the AMF may use the location service response in order to provide a location service related to an emergency call.

Hereinafter, a Hybrid Automatic Repeat Request (HARQ) procedure will be described.

An error compensation scheme for ensuring communication reliability may include a Forward Error Correction (FEC) scheme and an Automatic Repeat Request (ARQ) scheme. In the FEC scheme, error at a reception end may be corrected by adding an extra error correction code to information bits. The FEC scheme is advantageous in that time delay is low and information that is separately transmitted and received between transmission and reception ends is not required, but is disadvantageous in that system efficiency is degraded in a fine channel environment. The ARQ scheme has high transmission reliability, but is disadvantageous in that time delay occurs and system efficiency is degraded in a poor channel environment.

The Hybrid Automatic Repeat Request (HARQ) scheme is obtained by combining the FEC and the ARQ, and in this case, performance may be improving performance by checking whether data received by a physical layer contains error that is not capable of being decoded and requesting retransmission when error occurs.

In the case of SL unicast and groupcast, HARQ feedback and HARQ combining at a physical layer may be supported. For example, when a reception UE operates in a resource allocation mode 1 or 2, the reception UE may receive a PSSCH from a transmission UE, and the reception UE may transmit HARQ feedback with respect to the PSSCH to the transmission UE using a Sidelink Feedback Control Information (SFCI) format through a physical sidelink feedback channel (PSFCH).

For example, the SL HARQ feedback may be enabled for unicast. In this case, in a non-Code Block Group (non-CBG) operation, the reception UE may decode the PSCCH with the reception UE as a target, and when the reception UE successfully decodes a transmission block related to the PSCCH, the reception UE may generate an HARQ-ACK. The reception UE may transmit the HARQ-ACK to the transmission UE. In contrast, when the reception UE decodes the PSCCH with the reception UE as a target and then does not successfully decode the transmission block related to the PSCCH, the reception UE may generate the HARQ-NACK. The reception UE may transmit the HARQ-NACK to the transmission UE.

For example, the SL HARQ feedback may be enabled for groupcast. For example, in the non-CBG operation, two HARQ feedback options may be supported for the groupcast.
(1) Groupcast option 1: When the reception UE decodes the PSCCH with the reception UE as a target and then fails in decoding the transmission block related to the PSCCH, the reception UE may transmit the HARQ-NACK to the transmission UE on the PSFCH. In contrast, when the reception UE decodes the PSCCH with the reception UE as a target and successfully decodes the transmission block related to the PSCCH, the reception UE may not transmit a HARQ-ACK to the transmission UE.
(2) Groupcast option 2: When the reception UE decodes the PSCCH with the reception UE as a target and then fails in decoding the transmission block related to the PSCCH, the reception UE may transmit the HARQ-NACK to the transmission UE on the PSFCH. When the reception UE decodes the PSCCH with the reception UE as a target and successfully decodes the transmission block related to the PSCCH, the reception UE may transmit the HARQ-ACK to the transmission UE on the PSFCH.

In case of mode 1 resource allocation, the time between a PSSCH and HARQ feedback transmission on PSFCH may be configured (in advance). For unicast and groupcast, if retransmission is required on the sidelink, such retransmission may be indicated to the base station (BS) by a UE within a coverage using a PUCCH. The transmission (Tx) UE may also transmit an indication message to the serving base station (BS) thereof. Here, the indication message may be configured in a form of SR (Scheduling Request)/BSR (Buffer Status Report) rather than HARQ ACK/NACK.

In the case of mode 2 resource allocation, the time between HARQ feedback transmission on PSFCH and PSSCH can be set (in advance).

### <Embodiments>

In the following embodiments, blind retransmission methods for a UE in a sidelink positioning system and devices therefor will be described in detail.

In the following embodiments, blind retransmission will be explained as a method of transmitting positioning signaling (e.g., positioning signaling (Tx), positioning signaling (Rx), etc.) and sidelink positioning reference signals (SL-PRSs) (e.g., SL-PRS (Tx), SL-PRS (Rx), etc.) with low latency in the sidelink positioning system and increasing the reception rate for the corresponding signals.

Herein, an SL-PRS and positioning signaling that a transmitting UE transmits (or retransmits) to a correspondent UE (receiving UE) are referred to as an SL-PRS (Tx) and positioning signaling (Tx), respectively. An SL-PRS and positioning signaling transmitted by a correspondent UE (receiving UE) to a transmitting UE are referred to as an SL-PRS (Rx) and positioning signaling (Rx), respectively.

In the present disclosure, the blind retransmission methods performed by the UE are described on the assumption of a positioning structure in which an SL-PRS and positioning signaling are transmitted in the same slot. However, the proposed blind retransmission methods may be similarly or equally applied to a positioning structure in which an SL-PRS and positioning signaling are transmitted in different slots.

The proposed blind retransmission methods may include the following operations: 1) an operation in which a retransmitting UE (transmitting UE) proactively retransmits an SL-PRS and positioning signaling as many times as the number of attempts defined according to predefined specific rules; and 2) an operation in which the retransmitting UE (transmitting UE) proactively retransmits an SL-PRS and positioning signaling until receiving an ACK for an transmitted signal from the correspondent UE (receiving UE).

The blind retransmission methods may be distinguished from a conventional stop-and-wait (SAW) operation method where a UE waits until receiving an ARQ-ACK/NACK after transmitting an SL-PRS and positioning signaling. In addition, the blind retransmission methods may be distinguished from a method of repeatedly transmitting a PRS and positioning signaling periodically/aperiodically, which is applied to the conventional NR positioning system depending on positioning methods such as sidelink Time Difference of Arrival (SL-TDoA) and/or sidelink Round Trip Time (SL-RTT).

Hereinafter, among the proposed blind retransmission methods, a method in which the retransmitting UE retransmits an SL-PRS and/or positioning signaling as many times as the number of attempts defined according to predefined specific rules and features thereof will be described in detail.

The basic operating principles of blind retransmission in the sidelink positioning system are as follows.

The retransmitting UE may transmit (or retransmit) an SL-PRS and positioning signaling one or more times periodically/aperiodically to minimize or avoid positioning performance degradation and positioning malfunction, which may occur due to a half-duplex problem, for example, 1) when it is difficult for the correspondent UE to successfully receive the signal because the channel quality between the retransmitting UE and correspondent UE is not good, and 2) when it is difficult for the correspondent UE to receive the signal because the correspondent UE transmits NR-V2X message packets or participates in two or more positioning processes.

In this case, the transmission attributes and/or allocation resources of the (re)transmitted positioning signaling may be the same for each (re)transmission attempt, or the transmission attributes and/or allocation resources may be preconfigured/predefined according to predetermined rules such that the transmission attributes and/or allocation resources change. In addition, the (re)transmitted positioning signaling may include the same information or different information for each attempt. The transmission attributes and/or allocated resources may include a channel coding rate, a modulation order, an SL-PRS transmission bandwidth, channel resource allocation and SL-PRS patterns for SL-PRS transmission, etc.

The patterns and transmission attributes of the (re)transmitted SL-PRS may be the same for each (re)transmission attempt, or the patterns and transmission attributes may be preconfigured/predefined according to predetermined rules such that the patterns and transmission attributes change.

In the positioning structure in which an SL-PRS and positioning signaling are transmitted in the same slot, the retransmitting UE may equally (re)transmit the SL-PRS and positioning signaling up to "X" times without receiving a feedback signal such as an ACK/NACK from the correspondent UE in response to the SL-PRS and positioning signaling. In this case, the value of the variable "X" may be configured by a system information block (SIB), RRC signaling, first stage SCI and/or second stage SCI on a PSCCH/PSSCH, etc. However, the present disclosure is not limited thereto, and the value of the variable "X" may be transmitted/signaled together with data.

In the positioning structure in which an SL-PRS and positioning signaling are transmitted in different slots, the maximum number of attempts to transmit the SL-PRS may be the same as or different from the maximum number of attempts to transmit the positioning signaling. In other words, the positioning signaling may be (re)transmitted up to "X" times, but the SL-PRS may be (re)transmitted up to "Y" times. In this case, the values of "X" and "Y" may be configured by an SIB, RRC signaling, first stage SCI and/or second stage SCI on a PSCCH/PSSCH, etc. However, the present disclosure is not limited thereto, and the values of "X" and "Y" may be transmitted/signaled together with data.

The above-described basic operating principles of the blind retransmission may be applied equally or similarly to various sidelink positioning processes including SL-TDoA positioning and SL-RTT positioning.

Hereinafter, blind retransmission methods for SL-RTT positioning will be described in detail.

First, there is proposed a method for effectively operating blind retransmission in consideration of SL-RTT positioning. The main operations and features thereof will be described in the following.

The transmitting UE may (re)transmit an SL-PRS (Tx) and positioning signaling (Tx) to the receiving UE in the same slot as many times as the maximum number of attempts "X". The receiving UE may (re)transmit an SL-PRS (Rx) and positioning signaling (Rx) to the transmitting UE as many times as the maximum number of attempts "X" in response to the received SL-PRS (Tx) and positioning signaling (Tx).

The transmitting UE may periodically/aperiodically configure and reserve channel resources for (re)transmitting the SL-PRS (Tx) and positioning signaling (Tx) "X" times in advance. The receiving UE may periodically/aperiodically configure and reserve channel resources for (re)transmitting the SL-PRS (Rx) and positioning signaling (Rx) "X" times in advance. In this case, the channel resources reserved by the transmitting UE and the channel resources reserved by the receiving UE may be alternately allocated in the time domain (alternating allocation). Alternatively, the same channel resources may be repetitively and alternately allocated (repetitive and alternative allocation). Further, the channel resources reserved by the transmitting UE and the channel resources reserved by the receiving UE may be sequentially allocated (sequential allocation) or randomly allocated to random positions (random allocation).

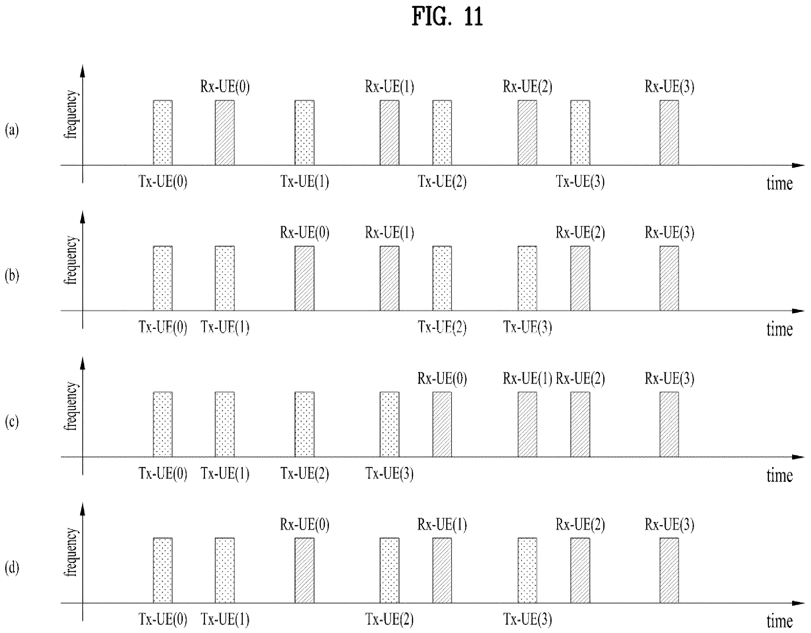

FIG. 11 is a diagram for explaining a method of allocating channel resources to a transmitting UE and a receiving UE for blind retransmission in the sidelink positioning system according to an embodiment.

Specifically, the embodiment of FIG. 11 shows various channel resource allocation methods for blind retransmission between the transmitting and receiving UEs when the number (X) of times that each of the transmitting and receiving UEs repeats transmission is set to 4.

As shown in FIG. 11, channel resource allocation methods for blind retransmission may include (a) an alternative allocation method, (b) a repetitive and alternative allocation method, (c) a sequential allocation method, and (d) a random allocation method.

In FIG. 11, Tx-UE (n) denotes an SL-PRS (Tx) and positioning signaling (Tx) (re)transmitted by the transmitting UE in an n-th slot, and Rx-UE (n) denotes an SL-PRS (Rx) and positioning signaling (Rx) (re)transmitted by the receiving UE in the n-th slot.

The transmitting UE may sequentially (re)transmit the SL-PRS (Tx) and positioning signaling (Tx) on the reserved channel resources as many times as the number of attempts "X". In this case, the transmitting UE may (re)transmit the SL-PRS (Tx) and positioning signaling (Tx), regardless of the time of receiving the SL-PRS (Rx) and positioning signaling (Rx) from the receiving UE. That is, the transmitting UE may operate differently from the conventional SAW operation method.

The receiving UE may sequentially (re)transmit the SL-PRS (Rx) and positioning signaling (Rx) on the reserved channel resources as many times as the number of attempts "X". In this case, the receiving UE may (re)transmit the SL-PRS (Rx) and positioning signaling (Rx), regardless of the time of receiving the SL-PRS (Tx) and positioning signaling (Tx) from the transmitting UE. That is, the receiving UE may operate differently from the conventional SAW operation method. However, the receiving UE may transmit the SL-PRS (Rx) and positioning signaling (Rx) after the initial reception of the SL-PRS (Tx) and positioning signaling (Tx) from the transmitting UE.

Hereinafter, a multi-TRTD (Tx-Rx time difference) reporting method in which the receiving UE transmits one or more TRTDs to the transmitting UE will be explained as a method for effectively operating blind retransmission in SL-RTT positioning systems.

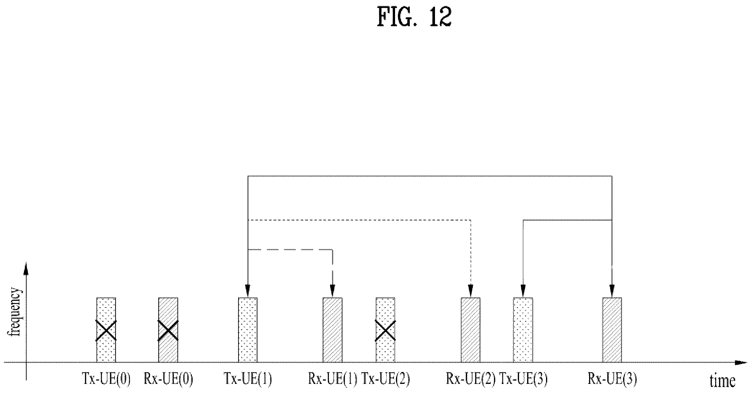

FIG. 12 is a diagram for explaining a blind retransmission operation method and a multi-TRTD reporting method in the SL-RTT positioning system according to an embodiment.

In the following, the main operations and features of blind retransmission methods in the SL-RTT positioning system will be described. In addition, the main operations and features of methods for the receiving UE to report multiple TRTDs to the transmitting UE in the SL-RTT positioning system will be described.

[Step-0]: In FIG. 12, the maximum number of attempts for an SL-PRS and positioning signaling between the transmitting and receiving UEs is set to 4. It is assumed that channel resources for transmission of the SL-PRS and positioning signaling are allocated according to the alternative allocation method described in FIG. 11. In addition, "X" marked on Tx-UE (0) and Tx-UE (2) in FIG. 12 indicates a slot in which the receiving UE fails to correctly receive an SL-PRS (Tx) and positioning signaling (Tx) due to a poor channel quality or a half-duplex problem although the transmitting UE (re)transmits the SL-PRS (Tx) and positioning signaling (Tx). On the other hand, "X" marked on Rx-UE (0) in FIG. 12 indicates a slot in which the receiving UE fails to (re)transmit an SL-PRS (Rx) and positioning signaling (Rx) because the receiving UE fails to correctly receive the SL-PRS (Tx) and positioning signaling (Tx) on Tx-UE (0) even though the receiving UE pre-allocates/pre-reserves channel resources.

[Step-1]: In FIG. 12, the receiving UE successfully receives the SL-PRS (Tx) and positioning signaling (Tx) transmitted by the transmitting UE in a Tx-UE (1) slot and (re)transmits the SL-PRS (Rx) and positioning signaling (Rx) in a reserved Rx-UE (1) slot. In this case, the positioning signaling (Rx) transmitted by the receiving UE may include a TRTD measured based on the SL-PRS (Tx) received in the Tx-UE (1) slot and the SL-PRS (Rx) transmitted in the Rx-UE (1) slot.

[Step-2]: In FIG. 12, although the receiving UE fails to receive in a Tx-UE (2) slot, the receiving UE (re)transmits the SL-PRS (Rx) and positioning signaling (Rx) in a reserved Rx-UE (2) slot. In this case, the positioning signaling (Rx) (re)transmitted by the receiving UE may include a TRTD measured based on the SL-PRS (Tx) received in the Tx-UE (1) slot and the SL-PRS (Rx) transmitted in the Rx-UE (2) slot.

[Step-3]: In FIG. 12, the receiving UE successfully receives the SL-PRS (Tx) and positioning signaling (Tx) transmitted by the transmitting UE in a Tx-UE (3) slot and (re)transmits the SL-PRS (Rx) and positioning signaling (Rx) in the reserved Rx-UE (1) slot. In this case, the positioning signaling (Rx) (re)transmitted by the receiving UE may include: 1) a TRTD measured based on the SL-PRS (Tx) received in the Tx-UE (1) slot and the SL-PRS (Rx) transmitted in a Rx-UE (3) slot; and 2) a TRTD measured based on the SL-PRS (Tx) received in the Tx-UE (3) slot and the SL-PRS (Rx) transmitted in the Rx-UE (3) slot.

Hereinafter, the main features of the multi-TRTD reporting method for the receiving UE will be described in detail with reference to FIG. 12.

TRTD information measured by the receiving UE after successfully receiving an SL-PRS (Rx) and positioning signaling (Rx) from the transmitting UE may not be successfully delivered to the transmitting UE due to various reasons. As a result, channel resources used by the transmitting UE to (re)transmit the SL-PRS (Rx) and positioning signaling (Rx) may be meaninglessly wasted. The multi-TRTD reporting method described above in [Step-3] of FIG. 12 may minimize waste of channel resources that may occur when the receiving UE fails in signal (re)transmission. Further, according to the multi-TRTD reporting method, multiple positions may be measured based on multiple TRTDs, thereby not only improving positioning performance but also achieving faster positioning.

The number "N" of TRTDs reported by the receiving UE may be predetermined or predefined. The value of "N" may be configured by an SIB, RRC signaling, first stage SCI and/or second stage SCI on a PSCCH/PSSCH, etc. However, the present disclosure is not limited thereto, and the value of "N" may be transmitted/signaled together with data.

Hereinafter, a method of (re)transmitting an SL-PRS and positioning signaling in SL-RTT positioning will be described in detail.

Unique IDs may or may not be assigned to positioning packets and/or NR-V2X message packets that carry positioning signaling. When unique IDs are assigned, the same or different ID values may be allocated for each (re)transmission attempt.

Positioning signaling (Tx) transmitted by the transmitting UE may include at least one of the following information about an SL-PRS (Tx).
- The number of times that the transmitting UE attempts to (re)transmit the SL-PRS (Tx)
- Information on unique SL-PRS (Tx) IDs defined to identify each SL-PRS (Tx) and information on cyclic shift sizes defined to generate different SL-PRS (Tx) patterns. A method of generating a unique SL-PRS (Tx) ID and a method of generating an SL-PRS (Tx) pattern based on a different cyclic shift size will be described in detail later.
- Scheduling information on channel resources for (re)transmission of each SL-PRS (Tx)
- Information on each SL-PRS (Tx) pattern

Each SL-PRS (Tx) (re)transmitted by the transmitting UE may be identified by an SL-PRS (Tx) ID or an SL-PRS (Tx) pattern.

Positioning signaling (Rx) transmitted by the receiving UE may include at least one of the following information about an SL-PRS (Rx).
- The number of times that the receiving UE attempts to retransmit the SL-PRS (Rx)
- Information on unique SL-PRS (Rx) IDs defined to identify each SL-PRS (Rx) and information on cyclic shift sizes defined to generate different SL-PRS (Rx) patterns. A method of generating a unique SL-PRS (Rx) ID and a method of generating an SL-PRS (Rx) pattern based on a different cyclic shift size will be described in detail later.
- Information on an SL-PRS (Tx) in response to each SL-PRS (Rx), that is, information for identifying which SL-PRS (Rx) is a response to which SL-PRS (Tx). When the receiving UE transmits each SL-PRS (Rx), the receiving UE may inform the transmitting UE that each SL-PRS (Rx) is transmitted in response to which SL-PRS (Tx) among SL-PRSs (Tx) received from the transmitting UE.
- Scheduling information on channel resources for (re)transmission of each SL-PRS (Rx)
- Information on each SL-PRS (Rx) pattern
- Information on a measured TRTD and related additional information. The receiving UE may inform the transmitting UE which SL-PRS (Tx) ID and SL-PRS (Rx) ID or which SL-PRS(Tx) pattern and SL-PRS (Rx) pattern each measured TRTD is obtained based on.

Each SL-PRS (Rx) (re)transmitted by the receiving UE may be identified by an SL-PRS (Rx) ID or an SL-PRS (Rx) pattern.

Hereinafter, a method of identifying a (re)transmitted SL-PRS in SL-RTT positioning will be described in detail.

The transmitting UE may use unique SL-PRS (Tx) IDs to identify SL-PRSs (Tx), and different SL-PRS (Tx) IDs may be generated according to the following methods.

The SL-PRS (Tx) ID may be generated according to one of the following various methods.
- The SL-PRS (Tx) ID may be generated sequentially in the order of (re)transmitted SL-PRSs (Tx).
- Different SL-PRS (Tx) IDs may be generated according to a specific function that considers the number of SL-PRS (Tx) (re)transmissions as a factor or according to a specific rule defined based on the number of SL-PRS (Tx) (re)transmissions. For example, a unique SL-PRS (Tx) ID may be generated for each SL-PRS (Tx) by inputting the number of SL-PRS (Tx) (re)transmissions as a predetermined hash function factor.
- The SL-PRS (Tx) ID may be randomly generated. For example, the SL-PRS (Tx) ID may be generated by a random number generator for generating a random number by using the current time value as a seed.

The generated SL-PRS (Tx) ID may be used as follows.

Scheduling information on channel resources pre-allocated/pre-reserved to transmit the SL-PRS (Tx) may be transmitted through positioning signaling (Tx) related to the SL-PRS (Tx) along with the SL-PRS (Tx) ID.

Different SL-PRS (Tx) sequences may be generated based on the SL-PRS (Tx) ID. The SL-PRS (Tx) ID used to generate the SL-PRS (Tx) sequences may be transmitted through the positioning signaling (Tx) related to the corresponding SL-PRS (Tx), together with the scheduling information on the channel resources pre-allocated/pre-reserved to transmit the corresponding SL-PRS (Tx).

The transmitting UE may generate a different SL-PRS (Tx) by cyclic shifting an SL-PRS (Tx) pattern differently for each SL-PRS (Tx) (re)transmission attempt. In this case, the size of the cyclic shift for generating the SL-PRS (Tx) pattern may be obtained according to the following methods.

The size of the cyclic shift for generating the SL-PRS (Tx) pattern may be predefined according to the maximum number of SL-PRS (Tx) (re)transmissions. That is, different cyclic shift sizes may be predefined according to the maximum number of SL-PRS (Tx) (re)transmissions.

The size of the cyclic shift for generating the SL-PRS (Tx) pattern may be dynamically generated according to a specific function that considers the number of SL-PRS (Tx) (re)transmissions as a factor or according to a specific rule defined based on the number of SL-PRS (Tx) (re)transmissions.

The receiving UE may use unique SL-PRS (Rx) IDs to identify SL-PRSs (Rx), and different SL-PRS (Rx) IDs may be generated according to the following methods.

The SL-PRS (Rx) ID may be generated according to methods that are identical or similar to the SL-PRS (Tx) ID generation methods described above.

The SL-PRS (Rx) ID may be the same as the related SL-PRS (Tx) ID. Alternatively, the SL-PRS (Rx) ID may be dynamically generated according to a specific function that considers the SL-PRS (Tx) ID as a factor or according to a specific rule defined based on the number of SL-PRS (Tx) (re)transmissions. In this case, SL-PRS (Rx) IDs may be generated such that the SL-PRS (Rx) IDs has a one-to-one relationship with SL-PRS (Tx) IDs.

The receiving UE may generate a different SL-PRS (Rx) by cyclic shifting an SL-PRS (Rx) pattern differently for each SL-PRS (Rx) (re)transmission attempt. In this case, the size of the cyclic shift for generating the SL-PRS (Rx) pattern may be o according to the following methods.

The size of the cyclic shift for generating the SL-PRS (Rx) pattern may be defined and generated in the same or similar way as the above-described SL-PRS(Tx) pattern generation method.

The size of the cyclic shift for generating the SL-PRS (Rx) pattern may be set equal to the size of the cyclic shift for generating the SL-PRS (Tx) pattern. In this case, SL-PRS (Rx) patterns and SL-PRS (Tx) patterns having the same cyclic shift size may have a one-to-one relationship.

Hereinafter, blind retransmission methods for SL-TDoA positioning will be described in detail.

The blind retransmission methods for SL-TDoA positioning may be the same as or similar to blind retransmission methods performed by the transmitting UE among the blind retransmission methods for SL-RTT positioning.

A method of (re)transmitting an SL-PRS and positioning signaling in SL-TDoA positioning may be the same as or similar to the SL-PRS and positioning signaling (re)transmission method performed by the transmitting UE in SL-RTT positioning described above.

A method of identifying a (re-)transmitted SL-PRS in SL-TDoA positioning may be the same as or similar to the method of identifying an SL-PRS (Tx) in SL-RTT positioning described above.

Hereinafter, among the proposed blind retransmission methods, a method in which the transmitting UE proactively retransmits an SL-PRS and positioning signaling until receiving an ACK from the correspondent UE (i.e., ACK-based blind retransmission method) and features thereof will be described.

The basic operating principles of ACK-based blind retransmission in the sidelink positioning system are as follows.
- The transmitting UE may (re)transmit an SL-PRS (Tx) and positioning signaling (Tx) one or more times periodically/aperiodically. The ACK-based blind retransmission may have similar or identical (re)transmission characteristics to the above-described blind retransmission without consideration of an ACK.
- When the transmitting UE receives an ACK signal in response to the SL-PRS (Tx) and positioning signaling (Tx) or a signal corresponding to the ACK from the correspondent UE, the transmitting UE may stop (re)transmission.
- The correspondent UE may transmit the ACK signal only when the correspondent UE successfully receives the SL-PRS (Tx) and positioning signaling (Tx). The correspondent UE may not transmit the ACK signal when the correspondent UE fails to successfully receive the SL-PRS (Tx) and/or positioning signaling (Tx).

In this case, the correspondent UE may transmit the ACK signal according to one of the following methods.
- The correspondent UE may transmit the ACK signal on a pre-reserved/pre-allocated PSFCH.
- The correspondent UE may transmit the ACK signal on a PSCCH + PSSCH (e.g., first stage SCI, second stage SCI, and/or data).
- When the correspondent UE is participating in SL-RTT positioning as the receiving UE, ACK signal transmission may be replaced with SL-PRS (Rx) signal transmission, which will be described in detail later.

Hereinafter, ACK-based blind retransmission methods for SL-RTT positioning will be described in detail.

First, there is proposed a method for effectively operating ACK-based blind retransmission in consideration of SL-RTT positioning. Except for the ACK operation, the blind retransmission method may be the same as or similar to the above-described blind retransmission method with no use of an ACK. The main operations and features of the ACK-based blind retransmission method for SL-RTT positioning will be described.

The transmitting UE may (re)transmit an SL-PRS (Tx) and positioning signaling (Tx) to the receiving UE as many times as the maximum number of attempts "X". In this case, the SL-PRS (Tx) and positioning signaling (Tx) may be transmitted in one slot or in the same slot(s) whenever (re)transmission is performed. On the other hand, only when the receiving UE successfully receives the SL-PRS (Tx) and positioning signaling (Tx), the receiving UE may (re)transmit an SL-PRS (Rx) and positioning signaling (Rx) to the transmitting UE (in response to the SL-PRS (Tx) and positioning signaling (Tx) as many as the maximum number of attempts "Y". In this case, the SL-PRS (Rx) transmitted by the receiving UE may be replaced with an ACK signal. In addition, the positioning signaling (Rx) may carry the ACK signal in first stage SCI, second stage SCI, and/or data.

The maximum number of attempts of the receiving UE "Y" may be greater than or equal to 1, and the maximum number of attempts may be set smaller than or equal to "X". The value of "Y" may be transmitted together with first stage SCI, second stage SCI, and/or data of an SIB and/or PSCCH/PSSCH.

Channel resources for the transmitting and receiving UEs to transmit an SL-PRS and positioning signaling may be reserved as follows.

The transmitting UE may periodically/aperiodically pre-configure and pre-reserve channel resources for (re)transmitting an SL-PRS (Tx) and positioning signaling (Tx) "X" times.

The receiving UE may periodically/aperiodically configure and reserve channel resources for (re)transmitting an SL-PRS (Rx) and positioning signaling (Rx) "Y" times. Alternatively, the receiving UE may instantaneously reserve the channel resources. For example, whenever the receiving UE correctly receives the SL-PRS (Tx) and positioning signaling (Tx), the receiving UE may dynamically configure and reserve the channel resources for the SL-PRS (Rx) and positioning signaling (Rx).

When the channel resources are pre-allocated to the transmitting and receiving UEs or when the channel resources are pre-reserved by the transmitting and receiving UEs, the channel resources may be arranged in the time domain as shown in FIG. 11.

The receiving UE may transmit an SL-PRS (Rx) and positioning signaling (Rx) on pre-designated channel resources. That is, it may be defined that the receiving UE preferentially uses a predetermined amount/size of channel resources in each slot.

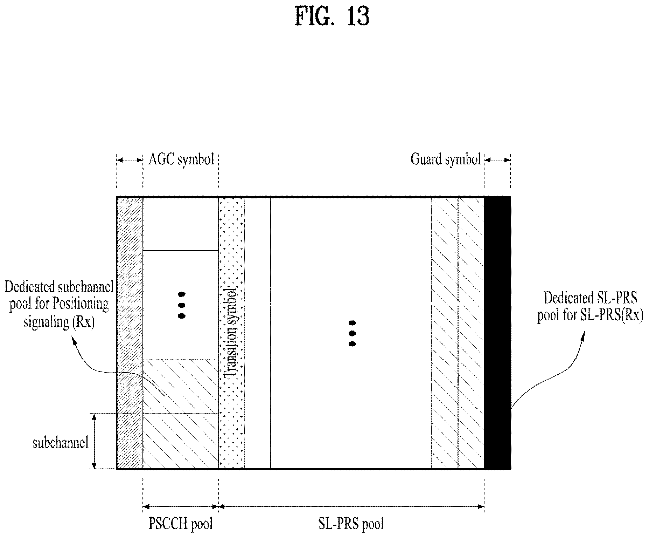

FIG. 13 is a diagram for explaining channel resources pre-designated for transmission of an SL-PRS (Rx) and positioning signaling (Rx) according to an embodiment.

Referring to FIG. 13, a resource pool for sidelink positioning may be largely divided into a PSCCH pool and an SL-PRS pool.

In this case, dedicated channel resources for the positioning signaling (Rx) may be allocated to some areas in the PSCCH pool, and dedicated channel resources for the SL-PRS (Rx) may be allocated to some areas in the SL-PRS pool.

The comb size of resources for an SL-PRS (Tx) transmitted in the SL-PRS pool may be 1. That is, the SL-PRS (Tx) may be transmitted in one OFDM symbol. In this case, scheduling information and positioning-related information on the transmitted SL-PRS (Tx) may be transmitted on a subchannel preconfigured or reserved in the PSCCH pool.

A transition symbol represents a symbol used to guarantee the time required for one antenna (module) of the UE to perform mode switching for transmission and reception in the SL-PRS pool with a relatively wide transmission bandwidth while performing transmission and reception in the PSCCH pool with a relatively narrow transmission bandwidth (e.g., switching from the transmission mode to the reception mode or switching from the reception mode to the transmission mode).

A dedicated subchannel pool for the positioning signaling (Rx) may be allocated to one or more subchannels in the PSCCH pool.

A dedicated SL-PRS pool for the SL-PRS (Rx) may be allocated to a duration of one or more OFDM symbol within the SL-PRS pool.

As described above, the receiving UE may pre-reserve and use the dedicated subchannel pools and the dedicated SL-PRS pool. Alternatively, the receiving UE may use the dedicated subchannel pools and the dedicated SL-PRS pool instantaneously through competition with other UEs.

Hereinafter, an ACK-based blind retransmission procedure between the transmitting and receiving UEs in SL-RTT positioning will be described.

The transmitting UE may (re)transmit an SL-PRS (Tx) and positioning signaling (Tx) on pre-allocated/pre-reserved periodic/aperiodic channel resources. The transmitting UE may perform the sequential (re)transmission process as many times as the maximum number of attempts "X" until receiving an SL-PRS (Rx) and positioning signaling (Rx) corresponding to an ACK from the receiving UE. If the transmitting UE fails to correctly receive the SL-PRS (Rx) and positioning signaling (Rx) from the receiving UE within the maximum number of attempts "X", the transmitting UE may reschedule channel resources to perform blind retransmission again.

The receiving UE may perform decoding and ToA measurement on the SL-PRS (Tx) and positioning signaling (Tx), which are (re)transmitted on the pre-allocated/pre-reserved periodic/aperiodic channel resources. Then, when the receiving UE determines that the SL-PRS (Tx) and positioning signaling (Tx) are successfully received, the receiving UE may (re)transmit the SL-PRS (Rx) and positioning signaling (Rx) as many times as a predefined number of attempts "Y". In this case, if the number of attempts "Y" is greater than 2, the multi-TRTD reporting method in the above-described blind retransmission methods may be equally applied.

The content and transmission method of positioning signaling transmitted by the transmitting and receiving UEs may be the same as or similar to those of the above-described blind retransmission methods.

A method of identifying an SL-PRS (Tx) (re)transmitted by the transmitting UE may be the same as or similar to the blind retransmission method described above.

In the ACK-based blind retransmission method for SL-TDoA positioning, a method and operation for the transmitting UE to (re)transmit an SL-PRS (Tx) and positioning signaling (Tx) may be the same as or similar to the method and operation for the transmitting UE to (re)transmit an SL-PRS (Tx) and positioning signaling (Tx) in SL-RTT positioning described above.

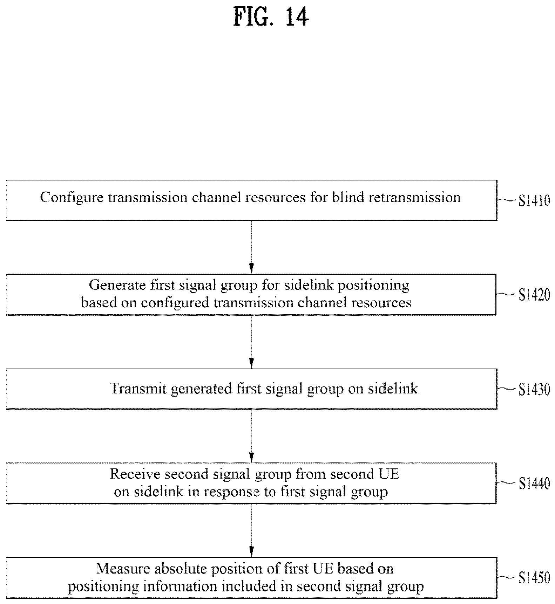

FIG. 14 is a flowchart illustrating a method by which a first UE performs blind retransmission in the sidelink positioning system according to an embodiment.

In the following description, a first UE and a second UE may be replaced by a transmitting UE and a receiving UE, respectively.

Referring to FIG. 14, the first UE may configure transmission channel resources for blind retransmission (S1410). In this case, the transmission channel resources for blind retransmission may be pre-reserved and configured by the corresponding UE in real time during sidelink positioning. However, this is merely an embodiment. That is, according to another embodiment, the transmission channel resources for blind retransmission may be pre-configured based on a predetermined control signal received from a network (or BS) or another UE. For example, information on the transmission channel resources for blind retransmission may be received over a control signal or a data channel such as an RRC signal, an SIB, a medium access control (MAC) control element (CE), a first stage SCI and/or second stage SCI on a PSCCH/PSSCH, etc.

The first UE may generate a first signal group for sidelink positioning based on the configured transmission channel resources for blind retransmission (S1420).

The first UE may transmit the generated first signal group on a sidelink (S1430).

The first UE may receive a second signal group from the second UE on the sidelink in response to the first signal group (S 1440).

The first UE may measure the absolute position of the first UE based on positioning information included in the second signal group (S1450). In this case, the positioning information may include RTT or AoA measured based on an SL-PRS (Tx) and an SL-PRS (Rx) in response to the corresponding SL-PRS (Tx). According to an embodiment, the positioning information may include multiple TRTDs measured for multiple SL-PRSs (Tx).

In the embodiment of FIG. 14, the first signal group may include an SL-PRS (Tx) (or first SL-PRS) and positioning signaling (Tx) (or first positioning signaling), and the second signal group may include an SL-PRS (Rx) (or second SL-PRS) and positioning signaling (Rx) (or second positioning signaling). The first UE may transmit the SL-PRS (Tx) and positioning signaling (Tx) in the same slot and receive the SL-PRS (Rx) and positioning signaling (Rx) in the same slot.

The first signal group may be (re)transmitted by the first UE as many times as a predetermined maximum number of attempts (X), and the second signal group may be (re)transmitted by the second UE as many times as a predetermined maximum number of attempts (Y).

In this case, the values of X and Y may be received over an SIB, first stage SCI and/or second stage SCI on a PSCCH/PSSCH, and a data channel and then configured.

For example, the first UE may attempt to retransmit the first signal group regardless of whether the first UE receives a response to the first signal group. In this case, the response to the first signal group may be an ACK signal. However, this is merely an embodiment, and the ACK signal may be replaced with the SL-PRS (Rx) transmitted by the second UE.

As another example, the first UE may (re)transmit the first signal group as many times as the predetermined number of attempts (X) until receiving an ACK signal for the first signal group. In this case, if the first UE receives the ACK signal for the first signal group before reaching the predetermined number of attempts (X), the first UE may stop (re)transmitting the first signal group. On the other hand, if the first UE fails to receive the ACK signal for the first signal group until reaching the predetermined number of attempts (X), the first UE may reconfigure the transmission channel resources for blind retransmission by reserving or receiving the transmission channel resources again.

The positioning signaling (Tx) may include a first unique ID corresponding to the SL-PRS (Tx), which is transmitted together with the positioning signaling (Tx) in the same slot. For the blind retransmission, the first unique ID may change whenever the first signal group is transmitted.

In addition, for the blind transmission, the SL-PRS (Tx) may have a different pattern whenever the SL-PRS (Tx) is transmitted. In this case, the SL-PRS (Tx) pattern may vary by applying a different cyclic shift size whenever the SL-PRS (Tx) is transmitted. For example, the cyclic shift size may be determined based on the first unique ID.

The positioning signaling (Rx) may include a second unique ID corresponding to the SL-PRS (Rx), which is transmitted together with the positioning signaling (Rx) in the same slot. In this case, the second unique ID may be the same as the first unique ID corresponding to the corresponding SL-PRS (Tx). Alternatively, the second unique ID may be generated according to a specific rule with the first unique ID as a factor. The first unique ID may have a one-to-one relationship with the second unique ID.

The SL-PRS (Rx) may have a different pattern whenever the SL-PRS (Rx) is transmitted, similarly or identically to the SL-PRS (Tx) pattern. In this case, the SL-PRS (Rx) pattern may be generated based on the second unique ID.

As described above, the present disclosure has the advantage of providing a blind retransmission method with no use of an ACK and a blind retransmission method based on an ACK, which both are capable of improving the reliability of positioning signaling reception and SL-PRS reception and the accuracy of SL-PRS-based ToA measurement in the positioning system using a sidelink.

In addition, the present disclosure has the advantage of providing a blind transmission method for minimizing positioning performance degradation and avoiding positioning malfunction even if the retransmitting UE fails to receive an ACK/NACK feedback signal from the correspondent UE

In addition, the present disclosure has the advantage of providing a multi-TRTD reporting method for SL-RTT positioning, which is capable of improving the performance of the SL-RTT positioning not only by minimizing waste of channel resources used for the transmitting UE to (re)transmit an SL-PRS (Tx) and positioning signaling (Tx) due to signal (re)transmission failure of the receiving UE but also by simultaneously estimating multiple locations based on multiple TRTDs, which are received from the receiving UE in one piece of positioning signalling (Rx).

Further, the ACK-based blind retransmission method according to the present disclosure may operate channel resources efficiently compared to the blind retransmission method with no use of an ACK. In particular, according to the ACK-based blind retransmission method, an SL-PRS (Rx) and positioning signaling (Rx) may be transmitted on pre-designated dedicated channel resources, and an ACK may be replaced with the SL-PRS (Rx) in the SL-RTT positioning process, thereby increasing the efficiency of use of channel resources in the positioning system.

It is obvious that each of the examples of the proposed methods may also be included as one embodiment, and thus each example may be regarded as a kind of proposed method. Although the proposed methods may be implemented independently, some of the proposed methods may be combined (or merged) for implementation. In addition, it may be regulated that information on whether the proposed methods are applied (or information on rules related to the proposed methods) needs to be transmitted from the BS to the UE in a predefined signal (e.g., a physical layer signal, a higher layer signal, etc.).

### Communication system example to which the present disclosure is applied

Although not limited thereto, various descriptions, functions, procedures, proposals, methods, and/or operational flow charts of the present disclosure disclosed in this document may be applied to various fields requiring wireless communication/connection (5G) between devices.

Hereinafter, it will be illustrated in more detail with reference to the drawings. In the following drawings/description, the same reference numerals may exemplify the same or corresponding hardware blocks, software blocks, or functional blocks, unless otherwise indicated.

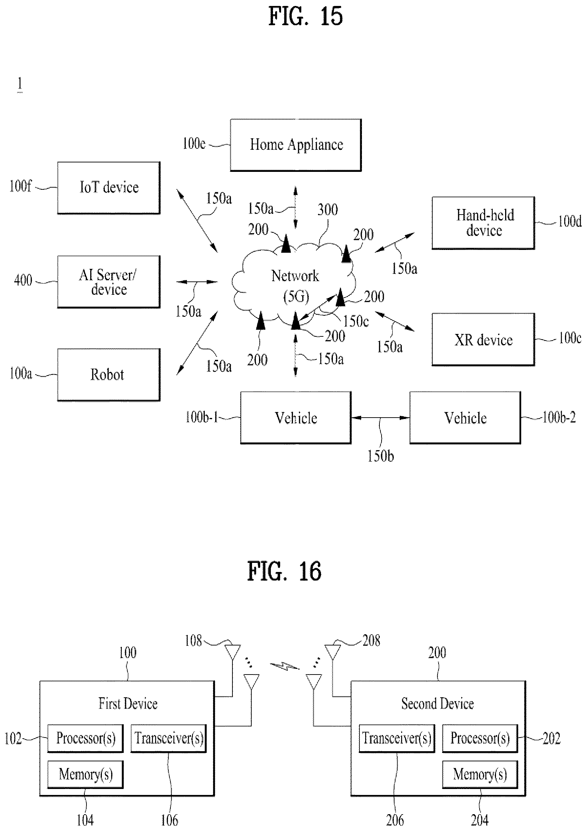

FIG. 15 illustrates a communication system applied to the present disclosure.

Referring to FIG. 15, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

The server according to the embodiment may provide various positioning-related services by interworking with wireless devices through a wired/wireless integrated network.

The server may include at least one processor and at least one memory, and may further include at least one transceiver. The processor may control the memory and/or the transceiver and may be configured to implement the descriptions, functions, procedures, proposals, methods, and/or operational flowcharts disclosed in this document. For example, the processor may process information within the memory to generate first information/signal and then transmit a radio signal including the first information/signal through the transceiver. The processor may receive a radio signal including second information/signal through the transceiver and then store information obtained by processing the second information/signal in the memory. The memory may be coupled to the processor and store various types of information related to operations of the processor. For example, the memory may store software code including commands for performing a part or all of processes controlled by the processor or for performing the descriptions, functions, procedures, proposals, methods, and/or operational flowcharts disclosed in this document. Here, the processor and the memory may be a part of a communication modem/circuit/chip designed to implement wired communication technology. The transceiver may be coupled to the processor and transmit and/or receive signals through a wired network. The transceiver may include a transmitter and/or a receiver. The transceiver may be interchangeably used with the transceiver.

The server may perform operations for determining the absolute position (or relative position) of a UE according to the embodiments for the UE to perform the blind retransmission methods in the sidelink positioning system, which are described above with reference to FIGS. 11 to 14. For example, the operations may include: configuring transmission channel resources for the blind retransmission; generating a first signal group for sidelink positioning based on the configured transmission channel resources; transmitting the generated first signal group on a sidelink; receiving a second signal group from a receiving UE on the sidelink in response to the first signal group; and measuring an absolute position of a transmitting UE based on positioning information included in the second signal group.

### Examples of wireless devices to which the present disclosure is applied

FIG. 16 illustrates a wireless device applicable to the present disclosure.

Referring to FIG. 16, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 15.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information acquired by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

Specifically, a UE or vehicle may include: the processor(s) 102 connected to the RF transceiver; and the memory(s) 104. The memory(s) 104 may include at least one program for performing the operations related to the embodiments described above with reference to FIGS. 11 to 14.

The processor(s) 102 may perform operations for determining the absolute position (or relative position) of the UE based on the program included in the memory(s) 104 according to the embodiments for the UE to perform the blind retransmission methods in the sidelink communication system described above in FIGS. 11 to 14.

Alternatively, a chipset including the processor(s) 102 and the memory(s) 104 may be configured. The chipset may include: at least one processor; and at least one memory operably connected to the at least one processor and configured to, when executed, cause the at least one processor to perform operations. The processor(s) 102 may perform operations for determining the absolute position (or relative position) of the UE based on the program included in the memory(s) 104 according to the embodiments for the UE to perform the blind retransmission methods in the sidelink communication system described above in FIGS. 11 to 14.

Alternatively, there may be provided a computer-readable storage medium including at least one computer program configured to cause at least one processor to perform operations.

The processor(s) 102 may perform operations for determining the absolute position (or relative position) of the UE based on the program included in the memory(s) 104 according to the embodiments for the UE to perform the blind retransmission methods in the sidelink communication system described above in FIGS. 11 to 14.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information acquired by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

The processor(s) 202 may perform operations for determining the absolute position (or relative position) of a UE based on program(s) included in the memory(s) 204 according to the embodiments for the UE to perform the blind retransmission methods in the sidelink communication system described above in FIGS. 11 to 14.

Alternatively, a chipset including the processor(s) 202 and the memory(s) 204 may be configured. The chipset may include: at least one processor; and at least one memory operably connected to the at least one processor and configured to, when executed, cause the at least one processor to perform operations. The processor(s) 202 may perform operations for determining the absolute position (or relative position) of the UE based on the program included in the memory(s) 204 according to the embodiments for the UE to perform the blind retransmission methods in the sidelink communication system described above in FIGS. 11 to 14.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

### Examples of wireless devices to which the present disclosure is applied

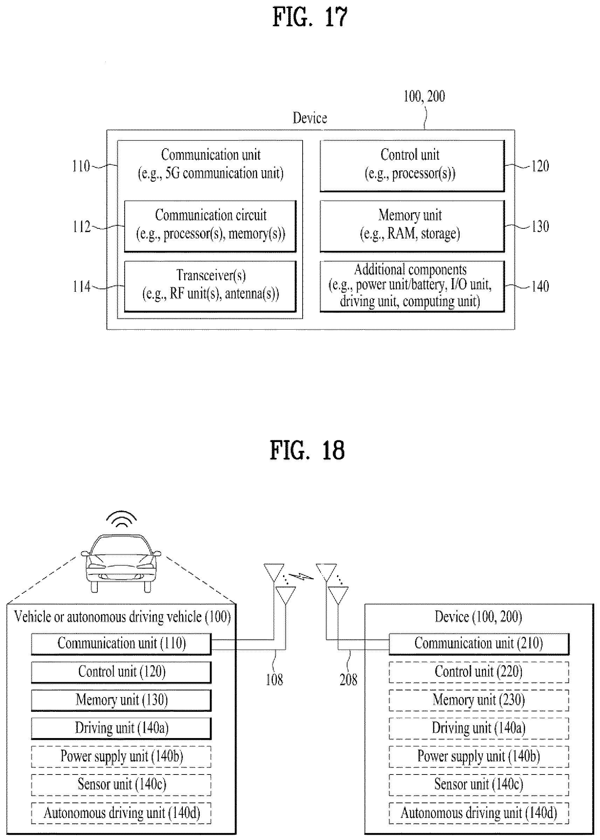

FIG. 17 illustrates another example of a wireless device applied to the present disclosure. The wireless device may be implemented in various forms according to a use-case/service (refer to FIG. 15)

Referring to FIG. 17, wireless devices 100 and 200 may correspond to the wireless devices 100 and 200 of FIG. 16 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 16. For example, the transceiver(s) 114 may include the one or more transceivers 106 and 206 and/or the one or more antennas 108 and 208 of FIG. 16. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 15), the vehicles (100b-1 and 100b-2 of FIG. 15), the XR device (100c of FIG. 15), the handheld device (100d of FIG. 15), the home appliance (100e of FIG. 15), the IoT device (100f of FIG. 15), a digital broadcast terminal, a hologram device, a public safety device, an MTC device, a medicine device, a fintech device (or a finance device), a security device, a climate/environment device, the AI server/device (400 of FIG. 15), the BSs (200 of FIG. 15), a network node, etc. The wireless device may be used in a mobile or fixed place according to a use-example/service.

In FIG. 17, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

### Examples of vehicles or autonomous vehicles to which the present disclosure is applied

FIG. 18 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 18, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 17, respectively.

The antenna unit 108 may be composed of a plurality of distributed antennas distributed in a vehicle. A location of a distributed antenna disposed in a vehicle may be different depending on the vehicle. A reference point for indicating the relative position of the distributed antenna in the vehicle may be predefined and recorded and maintained in a memory provided in the vehicle. In this case, the reference point may be defined differently depending on the vehicle.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). Also, the driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the acquired data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly acquired data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

Here, wireless communication technologies implemented in the wireless devices (XXX, YYY) of the present specification may include LTE, NR, and 6G, as well as Narrowband Internet of Things for low power communication. At this time, for example, the NB-IoT technology may be an example of a Low Power Wide Area Network (LPWAN) technology, and may be implemented in standards such as LTE Cat NB1 and/or LTE Cat NB2, and is not limited to the above-described names. Additionally or alternatively, the wireless communication technology implemented in the wireless devices (XXX, YYY) of the present specification may perform communication based on LTE-M technology. In this case, as an example, the LTE-M technology may be an example of LPWAN technology, and may be referred to by various names such as eMTC (enhanced machine type communication). For example, LTE-M technology may be implemented in at least one of a variety of standards, such as 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M, and is not limited to the above-described names. Additionally or alternatively, the wireless communication technology implemented in the wireless devices (XXX, YYY) of the present specification is at least one of ZigBee, Bluetooth, and Low Power Wide Area Network (LPWAN) considering low power communication, and is not limited to the above-described names. As an example, ZigBee technology can generate personal area networks (PANs) related to small/low-power digital communication based on various standards such as IEEE 802.15.4, and may be called various names.

The embodiments described above are those in which components and features of the present disclosure are combined in a predetermined form. Each component or feature should be considered optional unless explicitly stated otherwise. Each component or feature may be implemented in a form that is not combined with other components or features. In addition, it is also possible to constitute an embodiment of the present disclosure by combining some components and/or features. The order of operations described in the embodiments of the present disclosure may be changed. Some configurations or features of one embodiment may be included in other embodiments, or may be replaced with corresponding configurations or features of other embodiments. It is obvious that the embodiments may be configured by combining claims that do not have an explicit citation relationship in the claims or may be included as new claims by amendment after filing.

In this document, embodiments of the present disclosure have been mainly described based on a signal transmission/reception relationship between a terminal and a base station. Such a transmission/reception relationship is extended in the same/similar manner to signal transmission/reception between a terminal and a relay or a base station and a relay. A specific operation described as being performed by a base station in this document may be performed by its upper node in some cases. That is, it is obvious that various operations performed for communication with a terminal in a network comprising a plurality of network nodes including a base station may be performed by the base station or network nodes other than the base station. The base station may be replaced by terms such as a fixed station, a Node B, an eNode B (eNB), an access point, and the like. In addition, the terminal may be replaced with terms such as User Equipment (UE), Mobile Station (MS), and Mobile Subscriber Station (MSS).

In a hardware configuration, the embodiments of the present disclosure may be achieved by one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, etc.

In a firmware or software configuration, a method according to embodiments of the present disclosure may be implemented in the form of a module, a procedure, a function, etc. Software code may be stored in a memory unit and executed by a processor. The memory unit is located at the interior or exterior of the processor and may transmit and receive data to and from the processor via various known means.

As described before, a detailed description has been given of preferred embodiments of the present disclosure so that those skilled in the art may implement and perform the present disclosure. While reference has been made above to the preferred embodiments of the present disclosure, those skilled in the art will understand that various modifications and alterations may be made to the present disclosure within the scope of the present disclosure. For example, those skilled in the art may use the components described in the foregoing embodiments in combination. The above embodiments are therefore to be construed in all aspects as illustrative and not restrictive. The scope of the disclosure should be determined by the appended claims, not by the above description.

### INDUSTRIAL APPLICABILITY

Embodiments of the present disclosure as described above can be applied to a device that performs sidelink communication.

## Claims

1. A method of performing blind retransmission by a transmitting user equipment, UE, in a sidelink communication system, the method comprising:
configuring transmission channel resources for the blind retransmission;
generating a first signal group for sidelink positioning based on the configured transmission channel resources;
transmitting the generated first signal group on a sidelink;
receiving a second signal group from a receiving UE on the sidelink in response to the first signal group; and
measuring an absolute position of the transmitting UE based on positioning information included in the second signal group.

2. The method of claim 1, wherein the first signal group is repeatedly transmitted by the transmitting UE a predetermined number of times X, and
wherein the second signal group is repeatedly transmitted by the receiving UE a predetermined number of times Y.

3. The method of claim 2, wherein X and Y are configured by any one of a system information block, SIB, first stage sidelink control information, SCI, and/or second stage SCI on a physical sidelink control channel/physical sidelink shared channel, PSCCH/PSSCH, or a data channel.

4. The method of claim 1, wherein the first signal group is repeatedly transmitted regardless of whether the second signal group is received.

5. The method of claim 1, wherein the first signal group comprises first positioning signaling and a first sidelink positioning reference signal, and
wherein the first positioning signaling and the first sidelink positioning reference signal are mapped to and transmitted in a same slot.

6. The method of claim 5, wherein the first positioning signaling comprises information on a first unique identifier, ID, corresponding to the first signal group, and
wherein the first unique ID changes whenever the first signal group is transmitted.

7. The method of claim 6, wherein a pattern of the first sidelink positioning reference signal is generated by applying a different cyclic shift size whenever the first signal group is transmitted, and
wherein the cyclic shift size is determined based on the first unique ID.

8. The method of claim 6, wherein the second signal group comprises second positioning signaling and a second sidelink positioning reference signal, and
wherein a second unique ID included in the second positioning signaling is identical to the first unique ID, or
wherein the second unique ID is determined according to a specific rule with the first unique ID as a factor such that the second unique ID is mapped one-to-one thereto.

9. The method of claim 8, wherein a different cyclic shift size is applied to a pattern of the second sidelink positioning reference signal whenever the second signal group is received, and
wherein the cyclic shift size for the pattern of the second sidelink positioning reference signal is determined based on the second unique ID.

10. The method of claim 1, wherein the positioning information comprises at least one of Round Trip Time, RTT, information or Angle of Arrival, AoA, information measured based on at least one of a first sidelink positioning reference signal corresponding to the first signal group or a second sidelink positioning reference signal corresponding to the second signal group.

11. The method of claim 1, wherein the positioning information comprises information on multiple transmission reception time differences, TRTDs, measured for a plurality of first sidelink positioning reference signals.

12. The method of claim 1, wherein a method of allocating the transmission channel resources for the blind retransmission comprises at least one of an alternative allocation method, a repetitive and alternative allocation method, a sequential allocation method, or a random allocation method.

13. A user equipment, UE, configured to perform blind retransmission in a sidelink communication system, the UE comprising:
a transceiver configured to transmit and receive a signal; and
a processor connected to the transceiver,
wherein the processor is configured to:
configure transmission channel resources for the blind retransmission;
generate a first signal group for sidelink positioning based on the configured transmission channel resources;
transmit the generated first signal group on a sidelink;
receive a second signal group from another UE on the sidelink in response to the first signal group; and
measure an absolute position of the UE based on positioning information included in the second signal group.

14. A non-volatile computer-readable storage medium having stored thereon at least one computer program comprising instructions that, when executed by at least one processor, cause the at least one processor to perform operations for a user equipment, UE, the operations comprising:
configuring transmission channel resources for blind retransmission;
generating a first signal group for sidelink positioning based on the configured transmission channel resources;
transmitting the generated first signal group on a sidelink;
receiving a second signal group from another UE on the sidelink in response to the first signal group; and
measuring an absolute position of the UE based on positioning information included in the second signal group.

## Patentansprüche

1. Verfahren zum Durchführen einer Blind-Wiederübertragung durch ein übertragendes Benutzergerät, UE, in einem Sidelink-Kommunikationssystem, wobei das Verfahren umfasst:
Konfigurieren von Übertragungskanalressourcen für die Blind-Wiederübertragung;
Erzeugen einer ersten Signalgruppe für eine Sidelink-Positionierung auf der Grundlage der konfigurierten Übertragungskanalressourcen;
Übertragen der erzeugten ersten Signalgruppe auf einem Sidelink;
Empfangen einer zweiten Signalgruppe von einem empfangenden UE auf dem Sidelink als Reaktion auf die erste Signalgruppe; und
Messen einer absoluten Position des übertragenden UE auf der Grundlage von in der zweiten Signalgruppe enthaltenen Positionierungsinformationen.

2. Verfahren nach Anspruch 1, wobei die erste Signalgruppe von dem übertragenden UE eine vorbestimmte Anzahl von Malen X wiederholt übertragen wird, und
wobei die zweite Signalgruppe von dem empfangenden UE eine vorbestimmte Anzahl von Malen Y wiederholt übertragen wird.

3. Verfahren nach Anspruch 2, wobei X und Y durch einen beliebigen der folgenden Blöcke konfiguriert werden: einen Systeminformationsblock, SIB, eine Sidelink-Steuerungsinformation, SCI, einer ersten Stufe und/oder eine SCI einer zweiten Stufe auf einem physikalischen Sidelink-Steuerkanal/physikalischen, geteilten Sidelink-Kanal, PSCCH/PSSCH, oder einem Datenkanal.

4. Verfahren nach Anspruch 1, wobei die erste Signalgruppe unabhängig davon, ob die zweite Signalgruppe empfangen wird, wiederholt übertragen wird.

5. Verfahren nach Anspruch 1, wobei die erste Signalgruppe eine erste Positionierungssignalisierung und ein erstes Sidelink-Positionierungsreferenzsignal umfasst, und
wobei die erste Positionierungssignalisierung und das erste Sidelink-Positionierungsreferenzsignal einem gleichen Slot zugeordnet und in diesem übertragen werden.

6. Verfahren nach Anspruch 5, wobei die erste Positionierungssignalisierung Informationen über eine erste eindeutige Kennung, ID, umfasst, die der ersten Signalgruppe entspricht, und
wobei sich die erste eindeutige ID bei jeder Übertragung der ersten Signalgruppe ändert.

7. Verfahren nach Anspruch 6, wobei ein Muster des ersten Sidelink-Positionierungsreferenzsignals erzeugt wird, indem bei jeder Übertragung der ersten Signalgruppe eine andere zyklische Verschiebungsgröße angewendet wird, und
wobei die zyklische Verschiebungsgröße auf der Grundlage der ersten eindeutigen ID bestimmt wird.

8. Verfahren nach Anspruch 6, wobei die zweite Signalgruppe eine zweite Positionierungssignalisierung und ein zweites Sidelink-Positionierungsreferenzsignal umfasst, und
wobei eine zweite eindeutige ID, die in der zweiten Positionierungssignalisierung enthalten ist, mit der ersten eindeutigen ID identisch ist, oder
wobei die zweite eindeutige ID gemäß einer bestimmten Regel unter Berücksichtigung der ersten eindeutigen ID als Faktor bestimmt wird, sodass die zweite eindeutige ID dieser eins zu eins zugeordnet wird.

9. Verfahren nach Anspruch 8, wobei eine andere zyklische Verschiebungsgröße auf ein Muster des zweiten Sidelink-Positionierungsreferenzsignals angewendet wird, wenn die zweite Signalgruppe empfangen wird, und
wobei die zyklische Verschiebungsgröße für das Muster des zweiten Sidelink-Positionierungsreferenzsignals auf der Grundlage der zweiten eindeutigen ID bestimmt wird.

10. Verfahren nach Anspruch 1, wobei die Positionierungsinformationen mindestens eine der folgenden Informationen umfasst: Round Trip Time-, RTT-, Informationen oder Angle of Arrival-, AoA-, Informationen, gemessen auf der Grundlage mindestens eines ersten Sidelink-Positionierungsreferenzsignals, das der ersten Signalgruppe entspricht, oder eines zweiten Sidelink-Positionierungsreferenzsignals, das der zweiten Signalgruppe entspricht.

11. Verfahren nach Anspruch 1, wobei die Positionsinformationen Informationen über mehrere Übertragungs-Empfangs-Zeitdifferenzen, TRTDs, umfassen, die für eine Mehrzahl von ersten Sidelink-Positionsreferenzsignalen gemessen werden.

12. Verfahren nach Anspruch 1, wobei ein Verfahren zum Zuweisen der Übertragungskanalressourcen für die Blind-Wiederübertragung mindestens eines von einem alternativen Zuweisungsverfahren, einem repetitiven und alternativen Zuweisungsverfahren, einem sequenziellen Zuweisungsverfahren oder einem zufälligen Zuweisungsverfahren umfasst.

13. Benutzergerät, UE, das so konfiguriert ist, dass es eine Blind-Wiederübertragung in einem Sidelink-Kommunikationssystem durchführt, wobei das UE umfasst:
einen Transceiver, der zum Übertragen und Empfangen eines Signals konfiguriert ist; und
einen mit dem Transceiver verbundenen Prozessor,
wobei der Prozessor konfiguriert ist zum:
Konfigurieren von Übertragungskanalressourcen für die Blind-Wiederübertragung;
Erzeugen einer ersten Signalgruppe für eine Sidelink-Positionierung auf der Grundlage der konfigurierten Übertragungskanalressourcen;
Übertragen der erzeugten ersten Signalgruppe auf einem Sidelink;
Empfangen einer zweiten Signalgruppe von einem empfangenden UE auf dem Sidelink als Reaktion auf die erste Signalgruppe; und
Messen einer absoluten Position des UE auf der Grundlage von in der zweiten Signalgruppe enthaltenen Positionierungsinformationen.

14. Nichtflüchtiges, computerlesbares Speichermedium, auf dem mindestens ein Computerprogramm gespeichert ist, das Befehle umfasst, die, wenn sie von mindestens einem Prozessor ausgeführt werden, den mindestens einen Prozessor veranlassen, Operationen für ein Benutzergerät, UE, auszuführen, wobei die Operationen umfassen:
Konfigurieren von Übertragungskanalressourcen für eine Blind-Wiederübertragung;
Erzeugen einer ersten Signalgruppe für eine Sidelink-Positionierung auf der Grundlage der konfigurierten Übertragungskanalressourcen;
Übertragen der erzeugten ersten Signalgruppe auf einem Sidelink;
Empfangen einer zweiten Signalgruppe von einem anderen UE auf dem Sidelink als Reaktion auf die erste Signalgruppe; und
Messen einer absoluten Position des UE auf der Grundlage von in der zweiten Signalgruppe enthaltenen Positionierungsinformationen.

## Revendications

1. Procédé d'établissement de retransmission aveugle par un équipement utilisateur de transmission, UE, dans un système de communication latérale, le procédé comprenant:
la configuration de ressources de canal de transmission pour la retransmission aveugle;
la génération d'un premier groupe de signaux pour le positionnement de liaison latérale sur la base des ressources de canal de transmission configurées;
la transmission du premier groupe de signaux généré sur une liaison latérale;
la réception d'un deuxième groupe de signaux provenant d'un UE de réception sur la liaison latérale en réponse au premier groupe de signaux; et
la mesure d'une position absolue de l'UE de transmission sur la base des informations de positionnement incluses dans le deuxième groupe de signaux.

2. Procédé selon la revendication 1, dans lequel le premier groupe de signaux est transmis de manière répétée par l'UE de transmission un nombre prédéterminé de fois X, et
dans lequel le deuxième groupe de signaux est transmis de manière répétée par l'UE de réception un nombre prédéterminé de fois Y.

3. Procédé selon la revendication 2, dans lequel X et Y sont configurés par l'un quelconque parmi un bloc d'informations système, SIB, des informations de commande de liaison latérale de premier étage, SCI, et/ou des SCI de deuxième étage, sur un canal physique de commande de liaison latérale/canal physique de liaison latérale partagé, PSCCH/PSSCH, ou un canal de données.

4. Procédé selon la revendication 1, dans lequel le premier groupe de signaux est transmis de manière répétée, que le deuxième groupe de signaux soit reçu ou non.

5. Procédé selon la revendication 1, dans lequel le premier groupe de signaux comprend un premier signal de positionnement et un premier signal de référence de positionnement de liaison latérale, et
dans lequel le premier signal de positionnement et le premier signal de référence de positionnement de liaison latérale sont mappés et transmis dans un même créneau.

6. Procédé selon la revendication 5, dans lequel le premier signal de positionnement comprend des informations sur un premier identifiant unique, ID, correspondant au premier groupe de signaux, et
dans lequel le premier identifiant unique change chaque fois que le premier groupe de signaux est transmis.

7. Procédé selon la revendication 6, dans lequel une forme du premier signal de référence de positionnement de liaison latérale est généré par application d'une taille de décalage cyclique différente chaque fois que le premier groupe de signaux est transmis, et
dans lequel la taille du décalage cyclique est déterminée sur la base du premier identifiant unique.

8. Procédé selon la revendication 6, dans lequel le deuxième groupe de signaux comprend un deuxième signal de positionnement et un deuxième signal de référence de positionnement de liaison latérale, et
dans lequel un deuxième identifiant unique inclus dans le deuxième signal de positionnement est identique au premier identifiant unique, ou
dans lequel le deuxième identifiant unique est déterminé selon une règle spécifique, le premier identifiant unique étant le facteur, de telle sorte que le deuxième identifiant unique lui soit associé de manière biunivoque.

9. Procédé selon la revendication 8, dans lequel une taille de décalage cyclique différente est appliquée à une forme du deuxième signal de référence de positionnement de liaison latérale chaque fois que le deuxième groupe de signaux est reçu, et
dans lequel la taille du décalage cyclique pour la forme du deuxième signal de référence de positionnement de liaison latérale est déterminée sur la base du deuxième identifiant unique.

10. Procédé selon la revendication 1, dans lequel les informations de positionnement comprennent au moins l'un parmi des informations de temps aller-retour, RTT, ou des informations d'angle d'arrivée, AoA, mesurées sur la base d'au moins l'un parmi un premier signal de référence de positionnement de liaison latérale correspondant au premier groupe de signaux ou un deuxième signal de référence de positionnement de liaison latérale correspondant au deuxième groupe de signaux.

11. Procédé selon la revendication 1, dans lequel les informations de positionnement comprennent des informations sur les différences de temps de réception de transmission multiples, TRTD, mesurées pour une pluralité de premiers signaux de référence de positionnement de liaison latérale.

12. Procédé selon la revendication 1, dans lequel un procédé d'attribution des ressources de canal de transmission pour la retransmission aveugle comprend au moins l'un parmi un procédé d'attribution alternative, un procédé d'attribution répétitive et alternative, un procédé d'attribution séquentielle ou un procédé d'attribution aléatoire.

13. Équipement utilisateur, UE, configuré pour mettre en œuvre une retransmission aveugle dans un système de communication de liaison latérale, l'UE comprenant:
un émetteur-récepteur configuré pour transmettre et recevoir un signal; et
un processeur connecté à l'émetteur-récepteur,
dans lequel le processeur est configuré pour:
configurer des ressources de canal de transmission pour la retransmission aveugle;
générer un premier groupe de signaux pour le positionnement de liaison latérale sur la base des ressources de canal de transmission configurées;
transmettre le premier groupe de signaux généré sur une liaison latérale;
recevoir un deuxième groupe de signaux provenant d'un autre UE sur la liaison latérale en réponse au premier groupe de signaux; et
mesurer une position absolue de l'UE sur la base des informations de positionnement incluses dans le deuxième groupe de signaux.

14. Support d'enregistrement lisible par ordinateur non volatil sur lequel est stocké au moins un programme informatique comprenant des instructions qui, lorsqu'elles sont exécutées par au moins un processeur, amènent l'au moins un processeur à réaliser des opérations pour un équipement utilisateur, UE, les opérations comprenant:
la configuration de ressources de canal de transmission pour la retransmission aveugle;
la génération d'un premier groupe de signaux pour le positionnement de liaison latérale sur la base des ressources de canal de transmission configurées;
la transmission du premier groupe de signaux généré sur une liaison latérale;
la réception d'un deuxième groupe de signaux provenant d'un UE de réception sur la liaison latérale en réponse au premier groupe de signaux; et
la mesure d'une position absolue de l'UE sur la base des informations de positionnement incluses dans le deuxième groupe de signaux.
